# EUROPEAN PATENT SPECIFICATION

(11) **EP 4 542 746 B1**
(45) Date of publication and mention of the grant of the patent: **02.12.2026**
(21) Application number: 23827472.4
(22) Date of filing: 19.06.2023
(51) Int. Cl.: H01M 50/264, H01M 50/105, H01M 50/24

(54) **BATTERY CELL FIXING DEVICE**
BATTERIEZELLENBEFESTIGUNGSVORRICHTUNG
DISPOSITIF DE FIXATION D'ÉLÉMENT DE BATTERIE

(30) Priority: 20.06.2022 KR 20220075031
(43) Date of publication of application: 23.04.2025
(73) Proprietor: LG Energy Solution, Ltd., Seoul 07335 (KR)
(72) Inventor: KWON, Myung Bin, Daejeon 34122 (KR)
(74) Representative: Goddar, Heinz J.
(86) International application number: PCT/KR2023/008475
(87) International publication number: WO 2023/249357

(56) References cited:
- KR-A- 20150 034 611
- KR-A- 20150 050 220
- KR-A- 20160 071 108
- KR-A- 20160 071 108
- KR-A- 20160 104 452
- KR-A- 20170 055 804
- KR-B1- 101 795 705
- US-A1- 2013 280 596
- US-A1- 2015 050 525

## Description

### [TECHNICAL FIELD]

This application claims the benefit of priority based on Korean Patent Application No. 10-2022-0075031, dated June 20, 2022.

The present invention relates to a battery cell fixing apparatus, and more particularly, to a battery cell fixing apparatus that stably fixes a battery cell and prevents exterior defects of the battery case of the battery cell.

### [BACKGROUND ART]

A secondary battery refers to a battery that may be charged and discharged, unlike primary batteries that cannot be recharged. These secondary batteries are used in small, high-tech electronic devices such as mobile phones, PDAs and laptop computers as well as in energy storage systems (ESS), electric vehicles (EV) or hybrid electric vehicles (HEV) as a power source.

Secondary batteries are classified into can-type batteries wherein the electrode assembly is embedded in a metal can, and pouch-type batteries wherein the electrode assembly is embedded in a pouch (battery case). Pouch-type secondary batteries include an electrode assembly and a pouch (battery case) that accommodates the electrode assembly.

Meanwhile, when a pouch-type battery (hereinafter referred to as a battery cell) is manufactured, a battery cell fixing apparatus is used to ensure that the battery cell is stably transported to the work area for performing multiple processes, a predetermined task is performed in multiple processes with the battery cell fixed, or the battery cell pouch (battery case) with the electrode assembly accommodated therein maintains the correct shape.

The battery cell fixing apparatus may fix battery cells by applying pressure. Here, the pouch (battery case) of the battery cell may be deformed into an incorrect shape due to the pressure applied by the battery cell fixing apparatus and may not be restored to its original shape even after the pressure applied by the battery cell fixing apparatus is stopped. As a result, exterior defects of the battery cell may occur. Therefore, a battery cell fixing apparatus that stably fixes the battery cell and prevents exterior defects of the battery case of the battery cell is required.

The pertinent prior art document is Korean Patent Application Publication No. 10-2017-0122149. The document KR101795705 discloses a further battery cell fixing apparatus according to the state of the art.

### [DISCLOSURE]

### [TECHNICAL PROBLEM]

In order to solve above-described problem, it is an object of the present invention to provide a battery cell fixing apparatus that stably fixes a battery cell and prevents exterior defects of the battery case of the battery cell.

It is an object of the present invention to provide a battery cell fixing apparatus that prevents exterior defects of the battery case even when the thickness of the battery case increases.

It is an object of the present invention to provide a battery cell fixing apparatus that prevents exterior defects of the battery case even when the width of the electrode assembly accommodating space of the battery case is larger than that of the electrode assembly.

It is an object of the present invention to provide a battery cell fixing apparatus with a simple configuration that may be easily manufactured at low cost.

It is an object of the present invention to provide a battery cell fixing apparatus capable of protecting a battery cell.

Objects of the present invention are not limited to the above-described ones, and other objects and advantages of the present invention will be understood by the following description and will be more definitely understood through the embodiments of the present invention. It is also to be easily understood that the objectives and advantages of the present invention may be realized and attained by means and a combination thereof described in the appended claims.

### [TECHNICAL SOLUTION]

In order to solve above-described problem, the present invention provides a battery cell fixing apparatus for fixing a battery cell 100 including a battery case 110 and an electrode assembly 120 accommodated in the battery case 110 including a first frame 210.

The first frame 210 is in contact with one side surface in a first direction of the battery case 110 to press toward other direction of the first direction and fix the battery cell 100 while not pressing toward the other direction of the first direction and not fixing one side end E1 or other side end E2 in a second direction intersecting with the first direction of the one side surface of the battery case in the first direction by not being in contact with the one side end E1 or the other side end E2 in the second direction of the one side surface in the first direction of the battery case.

In one embodiment, the battery cell fixing apparatus may include a second frame 220.

The second frame 220 may be disposed to face the first frame 210 with the battery cell 100 therebetween.

The second frame 220 may be in contact with other side surface of the battery case 110 in the first direction located at other side of the first direction of the one side surface of the battery case 110 in the first direction to press toward one direction of the first direction and fix the battery cell 100 while not pressing toward the one direction of the first direction and not fixing one side end E3 or other side end E4 in the second direction of the other side surface of the battery case 110 by not being in contact with the one side end E3 or the other side end E4 in the second direction of the other side surface of the battery case 110 in the first direction.

In one embodiment, other end in the second direction of the one side end E1 in the second direction that is not in contact with the first frame 210 of the one side surface of the battery case 110 in the first direction and other end in the second direction of the one side end E3 in the second direction of the other side surface of the battery case 110 in the first direction that is not in contact with the second frame 220 may meet an imaginary straight line L1 extending in the first direction, or one end in the second direction of the other side end E2 in the second direction of the one side surface of the battery case 110 in the first direction that is not in contact with the first frame 210 and one end in the second direction of the other side end E4 in the second direction of the other side surface of the battery case 110 in the first direction that is not in contact with the second frame 220 may meet an imaginary straight line L2 extending in the first direction.

In one embodiment, the first frame 210 may include a first base 212 disposed at one side of the battery cell 100 in the first direction.

The first base 212 may include a first pressure surface S1 and a first anti-pressure groove H1.

The first pressure surface S1 may be in contact with the one side surface of the battery case 110 in the first direction.

The first anti-pressure groove H1 may be provided at one side or other side of the first pressure surface S1 in the second direction, be recessed in the one direction of the first direction, and face, in the first direction, the one side end E1 or the other side end E2 in the second direction of the one side surface of the battery case 110 in the first direction.

The first frame 210 may press toward the other direction of the first direction and fix the battery cell 100 through the first pressure surface S1 while not pressing toward the other direction of the first direction and not fixing the one side end E1 or the other side end E2 in the second direction of the one side surface of the battery case 110 in the first direction by not being in contact with the one side end E1 or the other side end E2 in the second direction of the one side surface of the battery case 110 in the first direction by the first anti-pressure groove H1.

The second frame 220 may include a second base 222 disposed at other side of the battery cell 100 in the first direction.

The second base 222 may include a second pressure surface S2 and a second anti-pressure groove H2.

The second pressure surface S2 may be in contact with the other side surface of the battery case 110 in the first direction.

The second anti-pressure groove H2 may be provided at one side or other side of the second pressure surface S2 in the second direction, be recessed in the other direction of the first direction, and face, in the first direction, the one side end E3 or the other side end E4 in the second direction of the other side surface of the battery case 110 in the first direction.

The second frame 220 may press toward the one direction of the first direction and fix the battery cell 100 through the second pressure surface S2 while not pressing toward the one direction of the first direction and not fixing the one side end E3 or the other side end E4 in the second direction of the other side surface of the battery case 110 in the first direction by not being in contact with the one side end E3 or the other side end E4 in the second direction of the other side surface of the battery case 110 in the first direction by the second anti-pressure groove H2.

In one embodiment, the first frame 210 may not press toward the other direction of the first direction and not fix the one side end E1 and the other side end E2 of the one side surface of the battery case 110 in the first direction by not being contact with the one side end E1 and the other side end E2 in the second direction of the one side surface of the battery case 110 in the first direction.

The first base 212 may include a pair of first anti-pressure grooves H1.

The pair of first anti-pressure grooves H1 may be provided at the one side and the other side of the first pressure surface S1 in the second direction, respectively, recessed in the one direction of the first direction.

The pair of the first anti-pressure grooves H1 may face, in the first direction, the one side end E1 and the other side end E2 in the second direction of the one side surface of the battery case 110 in the first direction, respectively.

The first frame 210 may not press toward the other direction of the first direction and not fix the one side end E1 and the other side end E2 in the second direction of the one side surface of the battery case 110 in the first direction by not being in contact with the one side end E1 and the other side end E2 in the second direction of the one side surface of the battery case 110 in the first direction by pair of the first anti-pressure grooves H1.

The second frame 220 may not press toward the one direction of the first direction and not fix the one side end E3 and the other side end E4 of the other side surface of the battery case 110 in the first direction by not being contact with the one side end E3 and the other side end E4 in the second direction of the other side surface of the battery case 110 in the first direction.

The second base 222 may include a pair of second anti-pressure grooves H2.

The pair of the second anti-pressure grooves H2 may be provided at the one side and the other side of the second pressure surface S2 in the second direction, respectively, recessed in the other direction of the first direction.

The pair of second anti-pressure grooves H2 may face, in the first direction, the one side end E3 and the other side end E4 in the second direction of the other side surface of the battery case 110 in the first direction, respectively.

The second frame 220 may not press the one direction of the first direction and not fix the one side end E3 and the other side end E4 in the second direction of the other side surface of the battery case 110 in the first direction by not being in contact with the one side end E3 and the other side end E4 in the second direction of the other side surface of the battery case 110 in the first direction by the pair of the second anti-pressure grooves H2.

In one embodiment, the first frame 210 may include a first base 212 disposed at the one side of the battery cell 100 in the first direction.

The first base 212 may include a first pressure surface S1 and a first anti-pressure groove H1.

The first pressure surface S1 may be in contact with the one side surface of the battery case 110 in the first direction.

The first anti-pressure groove H1 may be provided at one side or the other side of the first pressure surface S1 in the second direction, recessed in one direction of the first direction.

The first anti-pressure groove H1 may face, in the first direction, the one side end E1 or the other side end E2 in the second direction of the one side surface of the battery case 110 in the first direction.

The first frame 210 may press toward the other direction of the first direction and fix the battery cell 100 through the first pressure surface S1 while not pressing toward the other direction of the first direction and not fixing the one side end E1 or the other side end E2 in the second direction of the one side surface of the battery case 110 in the first direction by not being in contact with the one side end E1 or the other side end E2 in the second direction of the one side surface of the battery case 110 in the first direction by the first anti-pressure groove H1.

In one embodiment, the one side surface of the battery case 110 in the first direction may extend in a third direction intersecting with the first and the second directions.

The first pressure surface S1 and the first anti-pressure groove H1 may extend in the third direction along one side surface of the battery case 110 in the first direction.

In one embodiment, the first base 212 may include a third anti-pressure groove H3.

The third anti-pressure groove H3 may be provided at one side or the other side of the first pressure surface S1 in a third direction intersecting with the first and the second directions, recessed in the one direction of the first direction.

The third anti-pressure groove H3 may face, in the first direction, one side end or other side end in the third direction of the one side surface of the battery case 110 in the first direction.

The first frame 210 may press toward the other direction of the first direction and fix the battery cell 100 through the first pressure surface S1 while not pressing toward the other direction of the first direction and not fixing the one side end or the other side end in the third direction of the one side surface of the battery case 110 in the first direction by not being in contact with the one side end or the other side end in the third direction of the one side surface of the battery case 110 in the first direction by the third anti-pressure groove H3.

In one embodiment, the first frame 210 may not press toward the other direction of the first direction and not fix the one side end E1 and the other side end E2 of the one side surface of the battery case 110 in the first direction by not being contact with the one side end E1 and the other side end E2 in the second direction of the one side surface of the battery case 110 in the first direction.

The first base 212 may include a pair of first anti-pressure grooves H1.

The pair of first anti-pressure grooves H1 may be provided at the one side and the other side of the first pressure surface S1 in the second direction, respectively, recessed in the one direction of the first direction.

The pair of the first anti-pressure grooves H1 may face, in the first direction, the one side end E1 and the other side end E2 in the second direction of the one side surface of the battery case 110 in the first direction, respectively.

The first frame 210 may not press toward the other direction of the first direction and not fix the one side end E1 and the other side end E2 in the second direction of the one side surface of the battery case 110 in the first direction by not being in contact with the one side end E1 and the other side end E2 in the second direction of the one side surface of the battery case 110 in the first direction by the pair of the first anti-pressure grooves H1.

In one embodiment, the first frame 210 may include a first one side support 214a and a first other side support 214b.

The first one side support 214a may be disposed at one side of the first anti-pressure groove H1 in the second direction provided at one side of the first pressure surface S1 in the second direction of the pair of the first anti-pressure grooves H1.

The first one side support 214a may be coupled to the first base 212.

The first one side support 214a may face, in the second direction, or be in contact with the one side surface of the battery cell 100 in the second direction.

The first other side support 214b may be disposed at other side of the first anti-pressure groove H1 in the second direction provided at other side of the first pressure surface S1 in the second direction of the pair of the first anti-pressure grooves H1.

The first other side support 214b may be coupled to the first base 212.

The first other side support 214b may face, in the second direction, or be in contact with the other side surface of the battery cell 100 in the second direction.

In one embodiment, the first frame 210 may include a first support 214.

The first support 214 may be disposed at one side of the first anti-pressure groove H1 in the second direction provided at one side of the first pressure surface S1 in the second direction or at the other side of the first anti-pressure groove H1 in the second direction provided at other side of the first pressure surface S1 in the second direction.

The first support 214 may be coupled to the first base 212.

The first support 214 may face, in the second direction, or in contact with one side surface or other side surface of the battery cell 100 in the second direction.

In one embodiment, the battery case 110 may include a first case part 110a and a second case part 110b.

The first case part 110a may extend in the second direction and a third direction intersecting with the first and the second directions.

The second case part 110b may be disposed at one side of the first case part 110a in the first direction.

The second case part 110b may cover the first case part 110a.

The electrode assembly 120 may be accommodated between the first case part 110a and the second case part 110b.

The first case part 110a may include a first receptor 112a and a first extension 114a.

The second case part 110b may include a second receptor 112b and a second extension 114b.

The first receptor 112a and the second receptor 112b may face or be in contact with each other to provide an accommodating space AS where the electrode assembly 120 is accommodated.

The first extension 114a and the second extension 114b may extend outward from the first receptor 112a and the second receptor 112b, respectively, in at least one direction or other direction of the second direction.

The first extension 114a and the second extension 114b may at least partially surrounding the first receptor 112a and the second receptor 112b, respectively.

The first extension 114a and the second extension 114b may be bonded to each other.

The second receptor 112b may protrude further in the one direction of the first direction than the second extension 114b.

The first pressure surface S1 may be in contact with one side surface of the second receptor 112b in the first direction.

The first anti-pressure groove H1 may face, in the first direction, the one side end E1 or the other side end E2 in the second direction of the one side surface of the second receptor 112b in the first direction.

The first frame 210 may press toward the other direction of the first direction and fix the second receptor 112b of the battery cell 100 through the first pressure surface S1 while not pressing toward the other direction of the first direction and not fixing the one side end E1 or the other side end E2 in the second direction of the one side surface of the second receptor 112b in the first direction by not being in contact with the one side end E1 or the other side end E2 in the second direction of the one side surface of the second receptor 112b in the first direction by the first anti-pressure groove H1.

The first support 214 may face, in the second direction, or is in contact with the one side surface or the other side surface of the second receptor 112b in the second direction.

The first support 214 may be in contact with the one side surface of the second extension 114b in the first direction.

The first frame 210 may press toward the other direction of the first direction and fix the second extension 114b of the battery cell 100 through the first support 214.

In one embodiment, the battery case 110 may include a first case part 110a and a second case part 110b.

The first case part 110a may extend in the second direction and a third direction intersecting with the first and the second directions.

The second case part 110b may be disposed at one side of the first case part 110a in the first direction and cover the first case part 110a.

The electrode assembly 120 may be accommodated between the first case part 110a and the second case part 110b.

The first case part 110a and the second case part 110b may include a first receptor 112a and a second receptor 112b, respectively.

The first receptor 112a and the second receptor 112b may provide an accommodating space AS where the electrode assembly 120 is accommodated by facing or being in contact with each other.

The width W1 of the accommodating space AS in the second direction is larger than the width W2 of the electrode assembly 120 in the second direction.

Accordingly, at least a portion of the one side end E1 or the other side end E2 in the second direction of the one side surface of the second receptor 112b in the first direction may not be supported in the first direction.

The first frame 210 may be in contact with one side surface in a first direction of the second receptor 112b to press toward other direction of the first direction and fix the battery cell 100 while not pressing toward the other direction of the first direction and not fixing the one side end E1 or the other side end E2 in the second direction by not being in contact with the one side end E1 or the other side end E2 in the second direction of the one side surface in the first direction of the battery case.

In one embodiment, one end or other end thereof in the second direction of the second case part 110b may be connected to one end or other end of the first case part 110a in the second direction.

Other portion of the second case part 110b except the one end or the other end of the second case part 110b is detachable from the first case part 110a.

The second case part 110b may be folded relative to the first case part 110a to face, in the first direction, and cover the first case part 110a.

The second receptor 112b may have a concave shape for accommodating at least a portion of the electrode assembly 120.

Accordingly, a predetermined space PS2 constituting at least a portion of the accommodating space AS may be defined.

The width W1' of the predetermined space PS2 in the second direction among the accommodating spaces AS may be larger than the width W2 of the electrode assembly 120 in the second direction to prevent interference between the second receptor 112b and the electrode assembly 120 when the second case part 110b is folded relative to the first case part 110a with the electrode assembly 120 disposed in the first receptor 112a.

Accordingly, at least a portion of the one side end E1 or the other side end E2 in the second direction of the one side surface of the second receptor 112b in the first direction is not supported by the electrode assembly 120 in the first direction.

In one embodiment, the length in the second direction of the one side end E1 or the other side end E2 in the second direction of the one side surface of the battery case 110 in the first direction that is not in contact with the first frame 210 is equal to or greater than 1/40 and equal to or less than 1/5 of the length in the second direction of the one side surface of the battery case 110 in the first direction.

### [ADVANTAGEOUS EFFECTS]

According to embodiments of the present invention, a battery cell fixing apparatus for fixing a battery cell 100 including a battery case 110 and an electrode assembly 120 accommodated in the battery case 110, may include: a first frame 210 in contact with one side surface in a first direction of the battery case 110 to press toward other direction of the first direction and fix the battery cell 100 while not pressing toward the other direction of the first direction and not fixing one side end E1 or other side end E2 in a second direction intersecting with the first direction of the one side surface of the battery case in the first direction by not being in contact with the one side end E1 or the other side end E2 in the second direction of the one side surface in the first direction of the battery case.

Accordingly, since the first frame 210 presses, toward the other direction of the first direction, the center portion in the second direction between the one side end E1 and the other side end E2 in the second direction of the one side surface of the battery case 110 in the first direction, the battery cell 100 may be stably fixed. Thus, i) the battery cell 100 may be stably transported to the work area of one or more processes, ii) certain tasks may be smoothly performed in one or more processes with the battery cell 100 stably fixed, and iii) the correct shape of the battery case 110 may be stably maintained while the electrode assembly 120 is accommodated inside the battery case 110.

In addition, since the first frame 210 does not press, toward the other direction of the first direction, one side end E1 or the other side end E2 in the second direction of the one side surface of the battery case 110 in the first direction, the deformation of the edge portion of the one side or the other side of the battery case 110 in the second direction caused by the pressure applied by the first frame 210, which may not be restored even after the pressure is stopped, may be prevented. In particular, when the edge portion of the battery case 110 is subjected to pressure by the battery cell fixing apparatus 200, the edge portion of the battery case 110 may be deformed to an extent that makes the restoration of the edge portion of the battery case 110 to its original shape difficult due to design tolerances, assembly tolerances, or alignment errors of the battery cell 100 or the battery cell fixing apparatus 200. Thus, it is preferable that the edge portion of the battery case 110 is not subjected to pressure by the battery cell fixing apparatus 200.

Therefore, exterior defects of the battery case 110 due to the pressure applied by the battery cell fixing apparatus 200 may be prevented. As a result, the defect rate of the battery cell 100 may be reduced, thereby reducing the manufacturing cost of the battery cell 100.

Additionally, since the first frame 210 does not apply pressure to the one side end E1 or the other side end E2 in the second direction of the one side surface of the battery case 110 in the first direction, exterior defects of the battery case 110 due to the pressure applied by the battery cell fixing apparatus 200 may be prevented despite the increase in the thickness of the battery case 110. Accordingly, exterior defects may be prevented and the durability of the battery case 110 may be improved.

According to embodiments of the present invention, the battery cell fixing apparatus may further include: a second frame 220 disposed to face the first frame 210 with the battery cell 100 therebetween, and in contact with other side surface of the battery case 110 in the first direction located at other side of the first direction of the one side surface of the battery case 110 in the first direction to press toward one direction of the first direction and fix the battery cell 100 while not pressing toward the one direction of the first direction and not fixing one side end E3 or other side end E4 in the second direction of the other side surface of the battery case 110 by not being in contact with the one side end E3 or the other side end E4 in the second direction of the other side surface of the battery case 110 in the first direction.

Accordingly, as the first frame 210 and the second frame 220 presses the center portion in the second direction between one side ends E1 and E3 and the other side ends E2 and E4 in the second direction of the one side surface and the other side surface of the battery case 110 in the first direction, the battery cell 100 may be stably fixed.

In addition, since the first frame 210 and the second frame 220 does not press, toward the other direction and/or one direction of the first direction, the one side ends E1 and E3 or the other side ends E2 and E4 in the second direction of the one side surface and the other side surface of the battery case 110 in the first direction, the deformation of the edge portion of the one side or the other side of the battery case 110 in the second direction caused by the pressure applied by the first frame 210 and the second frame 220, which may not be restored even after the pressure is stopped, may be prevented.

Therefore, exterior defects of the battery case 110 due to the pressure applied by the battery cell fixing apparatus 200 may be prevented. As a result, the defect rate of the battery cell 100 may be reduced, thereby reducing the manufacturing cost of the battery cell 100.

In particular, even when one of the first frame 210 and the second frame 220 is fixed and the fixed frame relatively applies pressure to the battery cell 100 due to the pressure of the other frame, the fixed first frame 210 or the second frame 220 does not press the edge portion of one side or the other side of the battery case 110 in the second direction. Thus, exterior defects of the battery case 110 caused by the pressure applied by the battery cell fixing apparatus 200 may be prevented.

In addition, since the first frame 210 and the second frame 220 does not press, toward the other direction and/or one direction of the first direction, the one side ends E1 and E3 or the other side ends E2 and E4 in the second direction of the one side surface and the other side surface of the battery case 110 in the first direction, exterior defects of the battery case 110 due to the pressure applied by the battery cell fixing apparatus 200 may be prevented despite the increase in the thickness of the battery case 110. Accordingly, exterior defects may be prevented and the durability of the battery case 110 may be improved.

According to embodiments of the present invention, other end in the second direction of the one side end E1 in the second direction not in contact with the first frame 210 of the one side surface of the battery case 110 in the first direction and other end in the second direction of the one side end E3 in the second direction of the other side surface of the battery case 110 in the first direction not in contact with the second frame 220 may meet an imaginary straight line L1 extending in the first direction, or one end in the second direction of the other side end E2 in the second direction of the one side surface of the battery case 110 in the first direction not in contact with the first frame 210 and one end in the second direction of the other side end E4 in the second direction of the other side surface of the battery case 110 in the first direction not in contact with the second frame 220 may meet an imaginary straight line L2 extending in the first direction.

Accordingly, the boundaries where the first frame 210 and the second frame 220 press, toward the other direction and one direction of the first direction, the one side surface and the other side surface of the battery case 110 in the first direction, respectively, may correspond to each other. Therefore, since the areas where the battery cell fixing apparatus 200 presses the one side surface and the other side surface of the battery case 110 in the first direction correspond to each other, the battery cell fixing apparatus 200 may stably fix the battery cell 100.

According to embodiments of the present invention, the first frame 210 may include a first base 212 disposed at one side of the battery cell 100 in the first direction. The first base 212 may include: a first pressure surface S1 in contact with the one side surface of the battery case 110 in the first direction; and a first anti-pressure groove H1 provided at one side or other side of the first pressure surface S1 in the second direction, the first anti-pressure groove H1 recessed in the one direction of the first direction and facing, in the first direction, the one side end E1 or the other side end E2 in the second direction of the one side surface of the battery case 110 in the first direction. The first frame 210 may press toward the other direction of the first direction and fix the battery cell 100 through the first pressure surface S1 while not pressing toward the other direction of the first direction and not fixing the one side end E1 or the other side end E2 in the second direction of the one side surface of the battery case 110 in the first direction by not being in contact with the one side end E1 or the other side end E2 in the second direction of the one side surface of the battery case 110 in the first direction by the first anti-pressure groove H1. The second frame 220 may include a second base 222 disposed at other side of the battery cell 100 in the first direction. The second base 222 may include: a second pressure surface S2 in contact with the other side surface of the battery case 110 in the first direction; and a second anti-pressure groove H2 provided at one side or other side of the second pressure surface S2 in the second direction, the second anti-pressure groove H2 recessed in the other direction of the first direction and facing, in the first direction, the one side end E3 or the other side end E4 in the second direction of the other side surface of the battery case 110 in the first direction. The second frame 220 may press toward the one direction of the first direction and fix the battery cell 100 through the second pressure surface S2 while not pressing toward the one direction of the first direction and not fixing the one side end E3 or the other side end E4 in the second direction of the other side surface of the battery case 110 in the first direction by not being in contact with the one side end E3 or the other side end E4 in the second direction of the other side surface of the battery case 110 in the first direction by the second anti-pressure groove H2.

Accordingly, the first frame 210 and the second frame 220 which fix the battery cell 100 by pressing both sides of the battery case 110 in the first direction and not pressing and not fixing the edge portion of the one side or the other side of the battery case 110 in the second direction, may be easily manufactured at low cost with a simple configuration.

In addition, by providing the first anti-pressure groove H1 and the second anti-pressure groove H2 of the first frame 210 and the second frame 220 to face the edge portion of the one side or the other side of the battery case 110 in the second direction, the edge portion of the one side or the other side of the battery case 110 may be covered by the first frame 210 and the second frame 220 even when the edge portion is not pressed and not fixed by the first frame 210 and the second frame 220. Thus, the edge portion of one side or the other side of the battery case 110 in the second direction that is not pressed and not fixed by the first frame 210 and the second frame 220 may also be protected from external shocks, etc. by the first frame 210 and the second frame 220, thereby lowering the defect rate of the battery cell 100 and reducing the manufacturing cost of the battery cell 100.

According to embodiments of the present invention, the first frame 210 may not press toward the other direction of the first direction and not fix the one side end E1 and the other side end E2 of the one side surface of the battery case 110 in the first direction by not being contact with the one side end E1 and the other side end E2 in the second direction of the one side surface of the battery case 110 in the first direction. The first base 212 may include a pair of the first anti-pressure grooves H1 provided at the one side and the other side of the first pressure surface S1 in the second direction, respectively, the pair of the first anti-pressure grooves H1 recessed in the one direction of the first direction and facing, in the first direction, the one side end E1 and the other side end E2 in the second direction of the one side surface of the battery case 110 in the first direction, respectively. The first frame 210 may not press toward the other direction of the first direction and not fix the one side end E1 and the other side end E2 in the second direction of the one side surface of the battery case 110 in the first direction by not being in contact with the other direction of the first direction and not fixing the one side end E1 and the other side end E2 in the second direction of the one side surface of the battery case 110 in the first direction by pair of the first anti-pressure grooves H1. The second frame 220 may not press toward the one direction of the first direction and not fix the one side end E3 and the other side end E4 of the other side surface of the battery case 110 in the first direction by not being contact with the one side end E3 and the other side end E4 in the second direction of the other side surface of the battery case 110 in the first direction. The second base 222 may include a pair of the second anti-pressure grooves H2 provided at each of the one side and the other side of the second pressure surface S2 in the second direction, the pair of the second anti-pressure grooves H2 recessed in the other direction of the first direction and facing, in the first direction, the one side end E3 and the other side end E4 in the second direction of the other side surface of the battery case 110 in the first direction, respectively. The second frame 220 may not press the one direction of the first direction and not fix the one side end E3 and the other side end E4 in the second direction of the other side surface of the battery case 110 in the first direction by not being in contact with the one side end E3 and the other side end E4 in the second direction of the other side surface of the battery case 110 in the first direction by the pair of the second anti-pressure grooves H2.

Accordingly, since the first frame 210 and the second frame 220 do not press, toward the other direction and the one direction of the first direction, one side ends E1 and E3 or the other side ends E2 and E4 in the second direction of the one side surface and the other side surface of the battery case 110 in the first direction, respectively, the deformation of the two edge portions of the battery case 110 in the second direction caused by the pressure applied by the first frame 210 and the second frame 220, which may not be restored even after the pressure is stopped, may be all prevented. Therefore, exterior defects of the battery case 110 due to the pressure applied by the battery cell fixing apparatus 200 may be prevented. As a result, the defect rate of the battery cell 100 may be reduced, thereby reducing the manufacturing cost of the battery cell 100.

In addition, the first frame 210 and the second frame 220, which fix the battery cell 100 by pressing the battery case 110 while not pressing and not fixing the two edge portions of the battery case 110 in the second direction, may be easily manufactured at low cost with a simple configuration.

In addition, since a pair of first anti-pressure grooves H1 and a pair of second anti-pressure grooves H2 of the first frame 210 and the second frame 220 are provided to face the two edge portions of the battery case 110 in the second direction, the two edge portions of the battery case 110 in the second direction may be covered by the first frame 210 and the second frame 220 even when the two edge portions of the battery case 110 in the second direction are not pressed and not fixed by the first frame 210 and the second frame 220. Thus, two edge portion of one side or the other side of the battery case 110 in the second direction that is not pressed and not fixed by the first frame 210 and the second frame 220 may also be protected from external shocks, etc. by the first frame 210 and the second frame 220, thereby lowering the defect rate of the battery cell 100 and reducing the manufacturing cost of the battery cell 100.

According to embodiments of the present invention, the first frame 210 may include a first base 212 disposed at the one side of the battery cell 100 in the first direction. The first base 212 may include: a first pressure surface S1 in contact with the one side surface of the battery case 110 in the first direction; and a first anti-pressure groove H1 provided at one side or other side of the first pressure surface S1 in the second direction, the first anti-pressure groove H1 recessed in one direction of the first direction and facing, in the first direction, the one side end E1 or the other side end E2 in the second direction of the one side surface of the battery case 110 in the first direction.

Accordingly, the first frame 210 which fixes the battery cell 100 by pressing the battery case 110 and not pressing and not fixing the edge portion of the one side or the other side of the battery case 110 in the second direction, may be easily manufactured at low cost with a simple configuration.

In addition, by providing the first anti-pressure groove H1 of the first frame 210 to face the edge portion of the one side or the other side of the battery case 110 in the second direction, the edge portion of the one side or the other side of the battery case 110 may be covered by the first frame 210 even when the edge portion is not pressed and not fixed by the first frame 210 and the second frame 220. Thus, the edge portion of one side or the other side of the battery case 110 in the second direction that is not pressed and not fixed by the first frame 210 may also be protected from external shocks, etc. by the first frame 210, thereby lowering the defect rate of the battery cell 100 and reducing the manufacturing cost of the battery cell 100.

According to embodiments of the present invention, the one side surface of the battery case 110 in the first direction may extend in a third direction intersecting with the first and the second directions. The first pressure surface S1 and the first anti-pressure groove H1 extend in the third direction along the one side surface of the battery case 110 in the first direction.

Accordingly, when the edge portion of one side or the other side of the battery case 110 in the second direction, to which the one side end E1 or the other side end E2 in the second direction of the one side surface of the battery case 110 in the first direction belongs, extends in the third direction, the entirety of the edge portion of one side or the other side of the battery case 110 in the second direction extending in the third direction may be prevented from being pressed by the first frame 210. Accordingly, the deformation of the entirety of the edge portion of the one side or the other side of the battery case 110 in the second direction, which may not be restored, may be prevented. Therefore, exterior defects of the battery case 110 due to the pressure applied by the battery cell fixing apparatus 200 may be prevented. As a result, the defect rate of the battery cell 100 may be reduced, thereby reducing the manufacturing cost of the battery cell 100.

According to embodiments of the present invention, the first base 212 may include a third anti-pressure groove H3 provided on one side or other side of the first pressure surface S1 in a third direction intersecting with the first and the second directions, the third anti-pressure groove H3 recessed in the one direction of the first direction and facing, in the first direction, one side end or the other side end in the third direction of the one side surface of the battery case 110 in the first direction. The first frame 210 may press toward the other direction of the first direction and fix the battery cell 100 through the first pressure surface S1 while not pressing toward the other direction of the first direction and not fixing the one side end or the other side end in the third direction of the one side surface of the battery case 110 in the first direction by not being in contact with the one side end or the other side end in the third direction of the one side surface of the battery case 110 in the first direction by the third anti-pressure groove H3.

Accordingly, since the first frame 210 does not press, toward the other direction of the first direction, the one side end and the other side end in the third direction of the one side surface of the battery case 110 in the first direction, the deformation of the edge portion of the one side or the other side of the battery case 110 in the third direction caused by the pressure applied by the first frame 210, which may not be restored even after the pressure is stopped, may be prevented.

In addition, the edge portion of the one side or the other side of the battery case 110 may be covered by the first frame 210 even when the edge portion is not pressed and not fixed by the first frame 210 and the second frame 220. Thus, the edge portion of one side or the other side of the battery case 110 in the second direction that is not pressed and not fixed by the first frame 210 may also be protected from external shocks, etc. by the first frame 210, thereby lowering the defect rate of the battery cell 100 and reducing the manufacturing cost of the battery cell 100.

According to embodiments of the present invention, the first frame 210 may not press toward the other direction of the first direction and not fix the one side end E1 and the other side end E2 of the one side surface of the battery case 110 in the first direction by not being contact with the one side end E1 and the other side end E2 in the second direction of the one side surface of the battery case 110 in the first direction. The first base 212 may include a pair of the first anti-pressure grooves H1 provided at the one side and the other side of the first pressure surface S1 in the second direction, respectively, the pair of the first anti-pressure grooves H1 recessed in the one direction of the first direction and facing, in the first direction, the one side end E1 and the other side end E2 in the second direction of the one side surface of the battery case 110 in the first direction, respectively. The first frame 210 may not press toward the other direction of the first direction and not fix the one side end E1 and the other side end E2 in the second direction of the one side surface of the battery case 110 in the first direction by not being in contact with the one side end E1 and the other side end E2 in the second direction of the one side surface of the battery case 110 in the first direction by the pair of the first anti-pressure grooves H1.

Accordingly, since the first frame 210 does not press, toward the other direction of the first direction, one side end E1 and the other side end E2 in the second direction of the one side surface of the battery case 110 in the first direction, the deformation of the two edge portions of the battery case 110 in the second direction caused by the pressure applied by the first frame 210, which may not be restored even after the pressure is stopped, may be all prevented. Therefore, exterior defects of the battery case 110 due to the pressure applied by the battery cell fixing apparatus 200 may be prevented. As a result, the defect rate of the battery cell 100 may be reduced, thereby reducing the manufacturing cost of the battery cell 100.

In addition, the first frame 210, which fixes the battery cell 100 by pressing the battery case 110 while not pressing and not fixing the two edge portions of the battery case 110 in the second direction, may be easily manufactured at low cost with a simple configuration.

In addition, since a pair of first anti-pressure grooves H1 of the first frame 210 are provided to face the two edge portions of the battery case 110 in the second direction, the two edge portions of the battery case 110 in the second direction may be covered by the first frame 210 even when the two edge portions of the battery case 110 in the second direction is not pressed and not fixed by the first frame 210. Thus, two edge portion of one side or the other side of the battery case 110 in the second direction that is not pressed and not fixed by the first frame 210 may also be protected from external shocks, etc. by the first frame 210, thereby lowering the defect rate of the battery cell 100 and reducing the manufacturing cost of the battery cell 100.

According to embodiments of the present invention, the first frame 210 may include: a first one side support 214a disposed at one side of the first anti-pressure groove H1 in the second direction provided at one side of the first pressure surface S1 in the second direction of the pair of the first anti-pressure grooves H1, wherein the first one side support 214a is coupled to the first base 212 and faces, in the second direction, or may be in contact with one side surface of the battery cell 100 in the second direction; and a first other side support 214b disposed at other side of the first anti-pressure groove H1 in the second direction provided at other side of the first pressure surface S1 in the second direction of the pair of the first anti-pressure grooves H1, wherein the first other side support 214b is coupled to the first base 212 and faces, in the second direction, or may be in contact with the other side surface of the battery cell 100 in the second direction.

Accordingly, the battery cell 100 may be prevented from moving in one direction and the other direction of the second direction or from breaking away from the first frame 210 in one direction and the other direction of the second direction.

In addition, the first frame 210, which fixes the battery cell 100 by pressing the battery case 110 while not pressing and not fixing the two edge portions of the battery case 110 in the second direction and prevents the battery cell 100 from moving in one direction and the other direction of the second direction or from breaking away from the first frame 210 in one direction and the other direction of the second direction, may be easily manufactured at low cost with a simple configuration.

According to embodiments of the present invention, the first frame 210 may include a first support 214 coupled to the first base 212 and facing, in the second direction, or in contact with one side surface or other side surface of the battery cell 100 in the second direction, wherein first support 214 is disposed at one side of the first anti-pressure groove H1 in the second direction provided at one side of the first pressure surface S1 in the second direction or at the other side of the first anti-pressure groove H1 in the second direction provided at other side of the first pressure surface S1 in the second direction.

Accordingly, the battery cell 100 may be prevented from moving in one direction and the other direction of the second direction or from breaking away from the first frame 210 in one direction and the other direction of the second direction.

In addition, the first frame 210, which fixes the battery cell 100 by pressing the battery case 110 while not pressing and not fixing the edge portion of one side or the other side of the battery case 110 in the second direction and prevents the battery cell 100 from moving in one direction or the other direction of the second direction or from breaking away from the first frame 210 in one direction or the other direction of the second direction, may be easily manufactured at low cost with a simple configuration.

According to embodiments of the present invention, the battery case 110 may include: a first case part 110a extending in the second direction and a third direction intersecting with the first and the second directions; and a second case part 110b disposed at one side of the first case part 110a in the first direction and covering the first case part 110a. The electrode assembly 120 is accommodated between the first case part 110a and the second case part 110b. The first case part 110a may include a first receptor 112a and a first extension 114a. The second case part 110b may include a second receptor 112b and a second extension 114b. The first receptor 112a and the second receptor 112b face or are in contact with each other to provide an accommodating space AS where the electrode assembly 120 is accommodated. The first extension 114a and the second extension 114b extend outward from the first receptor 112a and the second receptor 112b, respectively, in at least one direction or other direction of the second direction, the first extension 114a and the second extension 114b at least partially surrounding the first receptor 112a and the second receptor 112b, respectively, and bondable to each other. The second receptor 112b protrudes further in the one direction of the first direction than the second extension 114b. The first pressure surface S1 may be in contact with one side surface of the second receptor 112b in the first direction. The first anti-pressure groove H1 faces, in the first direction, the one side end E1 or the other side end E2 in the second direction of the one side surface of the second receptor 112b in the first direction. The first frame 210 may press toward the other direction of the first direction and fix the second receptor 112b of the battery cell 100 through the first pressure surface S1 while not pressing toward the other direction of the first direction and not fixing the one side end E1 or the other side end E2 in the second direction of the one side surface of the second receptor 112b in the first direction by not being in contact with the one side end E1 or the other side end E2 in the second direction of the one side surface of the second receptor 112b in the first direction by the first anti-pressure groove H1. The first support 214 faces, in the second direction, or may be in contact with the one side surface or the other side surface of the second receptor 112b in the second direction and may be in contact with the one side surface of the second extension 114b in the first direction. The first frame 210 may press toward the other direction of the first direction and fix the second extension 114b of the battery cell 100 through the first support 214.

Accordingly, since the first frame 210 presses both the second receptor 112b and the second extension 114b of the battery cell 100 in the other direction of the first direction, the first frame 210 may stably fix the battery cell 100 and the battery case 110 may maintain the correct shape with the electrode assembly 120 accommodated inside the battery case 110.

In addition, the first frame 210, which may stably fix the battery cell 100 and allows the battery case 110 to maintain the correct shape with the electrode assembly 120 accommodated inside the battery case 110, may be easily manufactured at low cost with a simple configuration.

According to embodiments of the present invention, the battery case 110 may include: a first case part 110a extending in the second direction and a third direction intersecting with the first and the second directions; and a second case part 110b disposed at one side of the first case part 110a in the first direction and covering the first case part 110a. The electrode assembly 120 is accommodated between the first case part 110a and the second case part 110b. The first case part 110a and the second case part 110b comprise a first receptor 112a and a second receptor 112b, respectively, the first receptor 112a and the second receptor 112b providing an accommodating space AS where the electrode assembly 120 is accommodated by facing or being in contact with each other. A width W1 of the accommodating space AS in the second direction is larger than a width W2 of the electrode assembly 120 in the second direction such that at least a portion of the one side end E1 or the other side end E2 in the second direction of the one side surface of the second receptor 112b in the first direction is not supported by the electrode assembly 120 in the first direction. The first frame 210 may be in contact with one side surface in a first direction of the second receptor 112b to press toward other direction of the first direction and fix the battery cell 100 while not pressing toward the other direction of the first direction and not fixing the one side end E1 or the other side end E2 in the second direction by not being in contact with the one side end E1 or the other side end E2 in the second direction of the one side surface in the first direction of the battery case.

Accordingly, even when at least a portion of the one side end E1 or the other side end E2 in the second direction of the one side surface of the second receptor 112b in the first direction is not supported in the first direction, the first frame 210 does not press, toward the other direction of the first direction, the edge portion of the one side or the other side of the second receptor 112b in the second direction. Thus, exterior defects of the battery case 110 due to the pressure applied by the battery cell fixing apparatus 200 may be prevented.

According to embodiments of the present invention, the second case part 110b may be folded relative to the first case part 110a to face, in the first direction, and cover the first case part 110a, wherein one end or other end of the second case part 110b is connected to one end or other end of the first case part 110a in the second direction, and other portion of the second case part 110b except the one end or the other end of the second case part 110b is detachable from the first case part 110a. The second receptor 112b has a concave shape defining a predetermined space PS2 constituting at least a portion of the accommodating space AS for accommodating at least a portion of the electrode assembly 120. A width W1' of the predetermined space PS2 in the second direction of the accommodating spaces AS is larger than a width W2 of the electrode assembly 120 in the second direction to prevent interference between the second receptor 112b and the electrode assembly 120 when the second case part 110b is folded relative to the first case part 110a with the electrode assembly 120 disposed in the first receptor 112a such that at least a portion of the one side end E1 or the other side end E2 in the second direction of the one side surface of the second receptor 112b in the first direction is not supported by the electrode assembly 120 in the first direction.

Accordingly, in order to prevent interference between the second receptor 112b and the electrode assembly 120 when the second case part 110b connected to the end portion of the first case part 110a is folded to cover the first receptor 112a with the second receptor 112b, the width W1' of the predetermined space PS2 of the second receptor 112b in the second direction of the accommodating spaces AS is selected to be larger than the width W2 of the electrode assembly 120 in the second direction. As a result, even when at least a portion of the edge portion of the one side or the other side of the second receptor 112b in the second direction is not supported in the first direction by the electrode assembly 120, the first frame 210 does not press, toward the other direction of the first direction, the edge portion of the one side or the other side of the second receptor 112b in the second direction, thereby preventing exterior defects of the battery case 110 due to the pressure applied by the battery cell fixing apparatus 200.

According to embodiments of the present invention, a length in the second direction of the one side end E1 or the other side end E2 in the second direction of the one side surface of the battery case 110 in the first direction that is not in contact with the first frame 210 is equal to or greater than 1/40 and equal to or less than 1/5 of the length in the second direction of the one side surface of the battery case 110 in the first direction.

Accordingly, since the length in the second direction of the one side end E1 or the other side end E2 in the second direction of the one side surface of the battery case 110 in the first direction that is not in contact with the first frame 210 is not less than 1/40 of the length in the second direction of the one side surface of the battery case 110 in the first direction, the area of the edge portion of the one side or the other side of the battery case 110 in the second direction that is not pressed by the first frame 210 is sufficiently secured to prevent exterior defects of the battery case 110. In addition, since the length in the second direction of the one side end E1 or the other side end E2 in the second direction of the one side surface of the battery case 110 in the first direction that is not in contact with the first frame 210 is not greater than 1/5 of the length in the second direction of the one side surface of the battery case 110 in the first direction, the area of the battery case 110 that may be pressed by the first frame 210 is sufficiently secured to stably fix the battery cell 100.

In addition to the above-described effects, specific effects of the present invention will be described together with the following detailed description for implementing the present invention.

### [DESCRIPTION OF DRAWINGS]

FIGS. 1 and 2 are perspective views schematically illustrating a battery cell and a battery cell fixing apparatus according to an embodiment of the present invention.
FIGS. 3 and 4 are exploded perspective views of FIGS. 1 and 2. FIG. 5 is a side view of the battery cell and battery cell fixing apparatus of FIGS. 1 and 2.
FIG. 6 is a side cross-sectional view of the battery cell and battery cell fixing apparatus of FIGS. 1 and 2.
FIG. 7 is an exploded perspective view of the battery cell of FIGS. 1 to 6.
FIG. 8 is a diagram illustrating a state in which the battery case of the battery cell of FIG. 7 interferes with the electrode assembly disposed inside the battery case when the battery case is bent.

### [SPECIFIC DETAILS FOR CARRYING OUT THE INVENTION]

The above objects, features and advantages will be described later in detail with reference to the accompanying drawings, and accordingly, those skilled in the art to which the present invention belongs will be able to easily implement the technical idea of the present invention. In describing the present invention, when it is determined that the detailed description of the known technology related to the present invention may unnecessarily obscure the subject matter of the present invention, the detailed description will be omitted. Hereinafter, preferred embodiments according to the present invention will be described in detail with reference to the accompanying drawings. In the drawings, the same reference numerals are used to indicate the same or similar components.

Although "first", "second", and the like may be used to describe various components, these components are not limited by these terms. These terms are only used to distinguish one component from another component, and unless otherwise stated, the first component may be the second component, of course.

Throughout the specification, unless otherwise stated, each component may be singular or plural.

Hereinafter, the arrangement of an arbitrary component on the "upper portion (or lower portion)" or "upper (or lower)" of a component means that an arbitrary component is placed in contact with the upper (or lower) surface of the component. In addition, it may mean that other components may be interposed between the component and any component disposed on (or under) the component.

In addition, when a component is described as "linked", "coupled" or "connected" to another component, the components may be directly connected or connected to each other, but other components may be "interposed" between each component. ", or each component may be "linked", "coupled" or "connected" through other components.

Singular expressions used herein include plural expressions unless the context clearly dictates otherwise. In this application, terms such as "consisting of" or "comprising" should not be construed as necessarily including all of the various components or steps described in the specification. It should be construed that it may not include some of the components or some of the steps or may further include additional components or steps.

Meanwhile, the predetermined space PS2 described in the claims may be a second predetermined space PS2 described later.

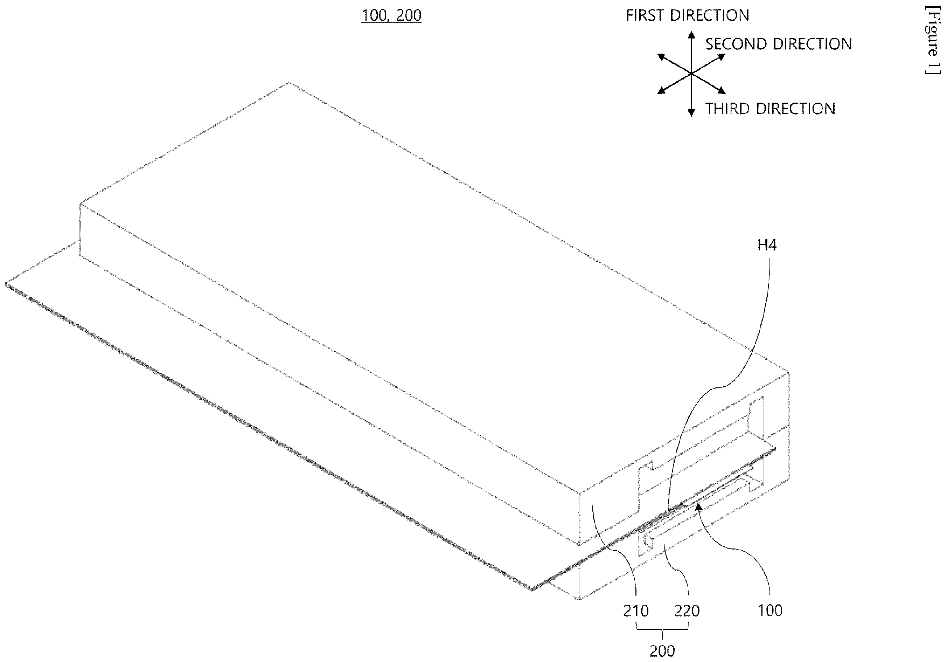

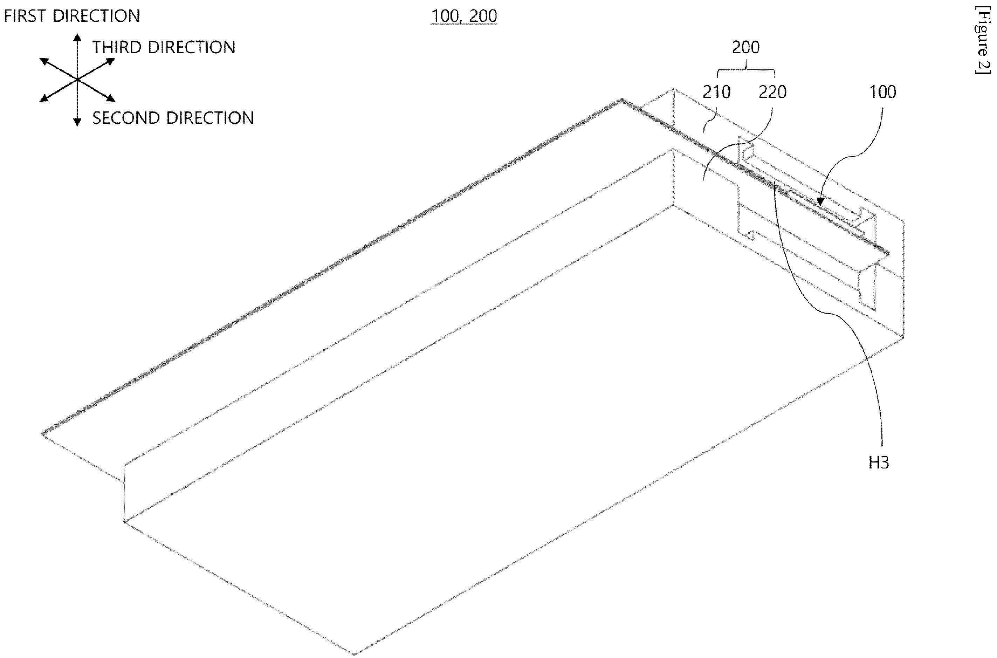

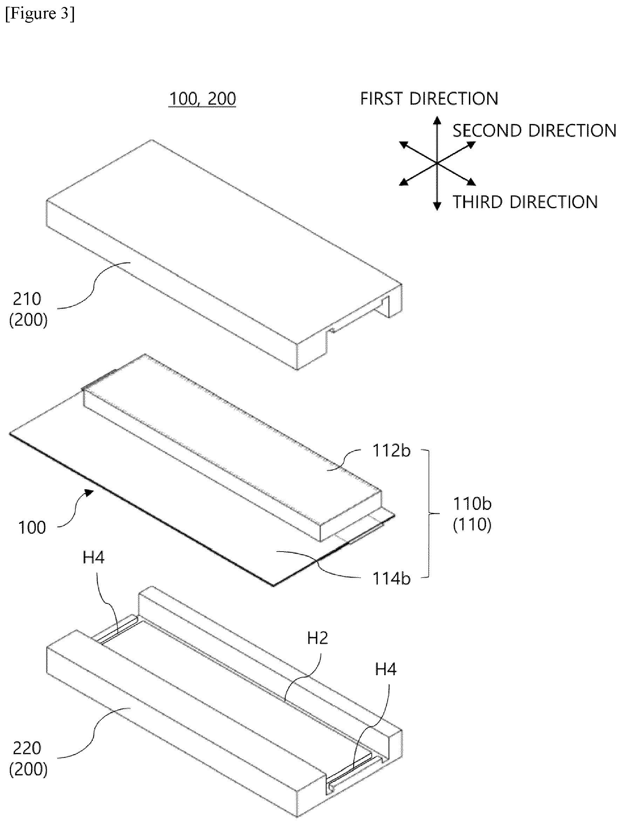

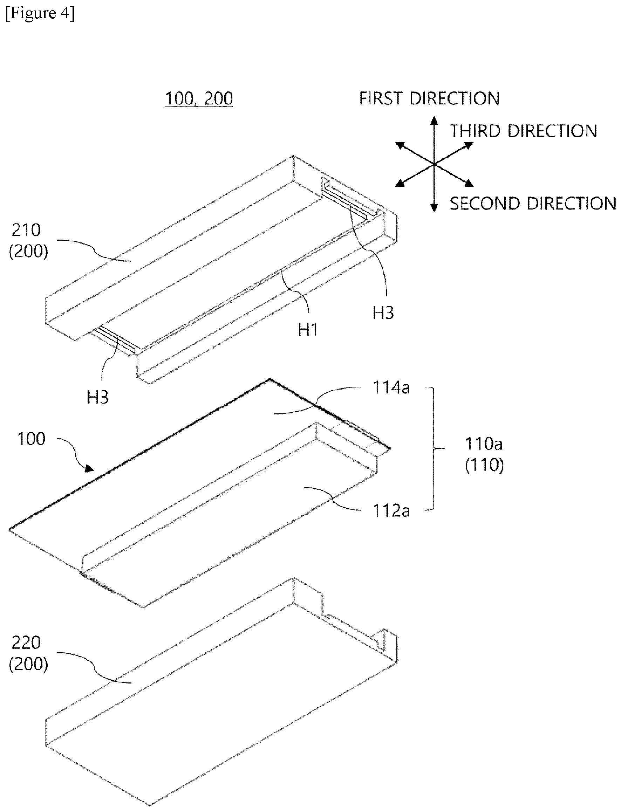

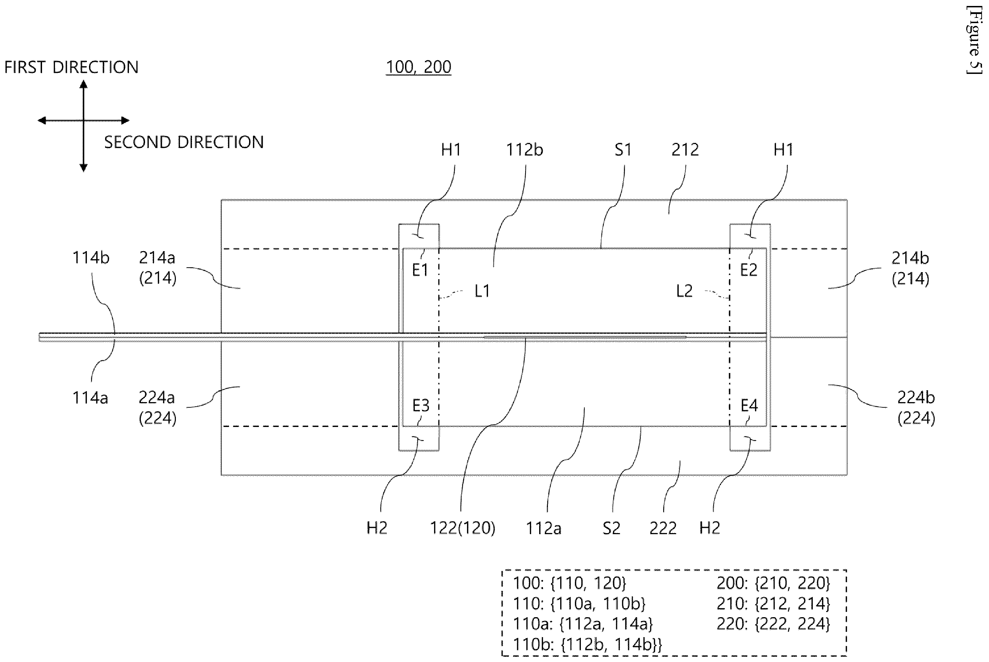

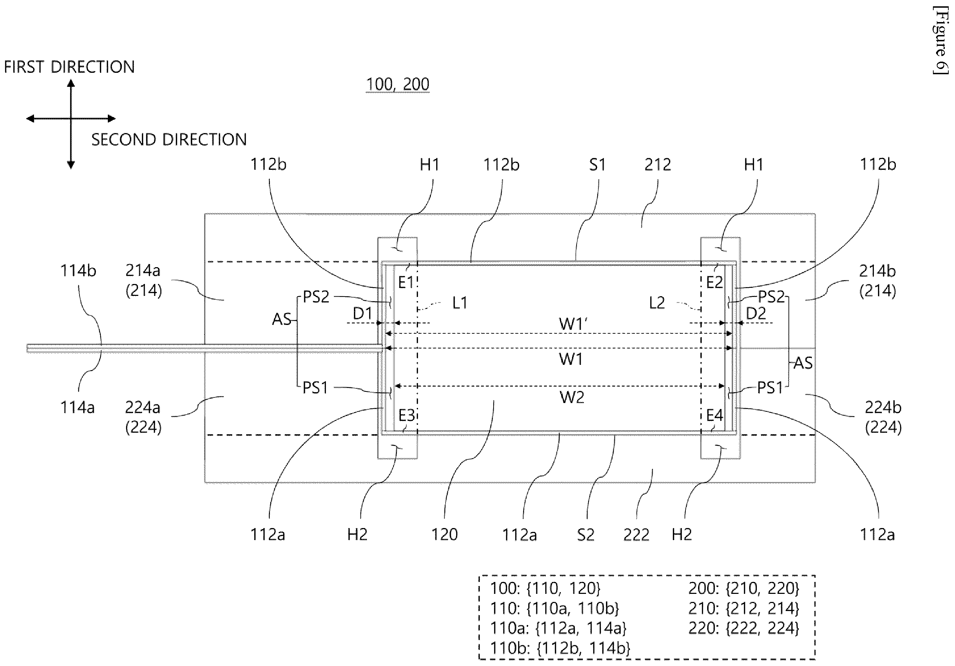

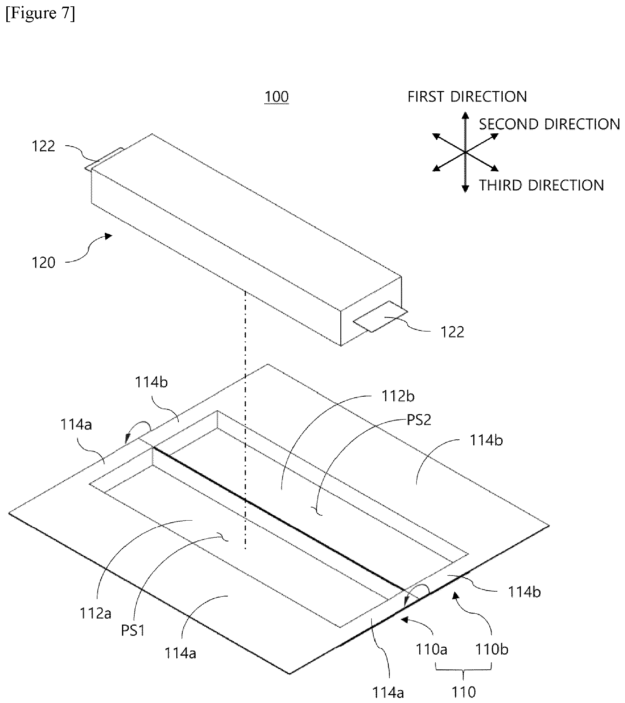

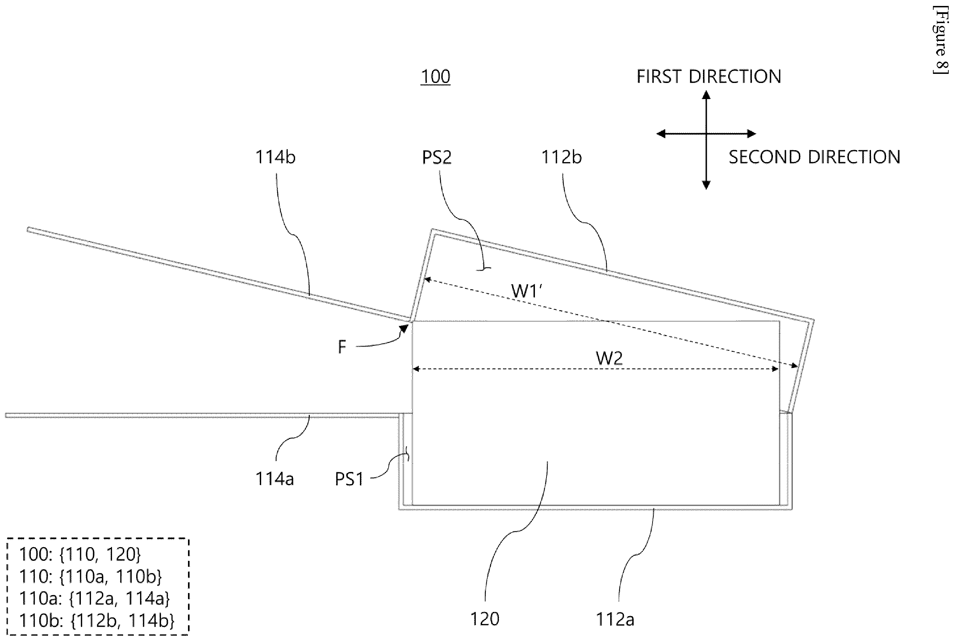

FIGS. 1 and 2 are perspective views schematically illustrating a battery cell and a battery cell fixing apparatus according to an embodiment of the present invention. FIGS. 3 and 4 are exploded perspective views of FIGS. 1 and 2. FIG. 5 is a side view of the battery cell and battery cell fixing apparatus of FIGS. 1 and 2. FIG. 6 is a side cross-sectional view of the battery cell and battery cell fixing apparatus of FIGS. 1 and 2. FIG. 7 is an exploded perspective view of the battery cell of FIGS. 1 to 6. FIG. 8 is a diagram illustrating a state in which the battery case of the battery cell of FIG. 7 interferes with the electrode assembly disposed inside the battery case when the battery case is bent.

### [Battery Cell]

Referring to FIGS. 1 to 8, the battery cell 100 according to one embodiment may include a battery case 110 and an electrode assembly 120.

### [Battery Case]

The battery case 110 may include a first case part 110a and a second case part 110b. The battery case 110 may be made of a material containing aluminum, for example.

### [First Case Part]

The first case part 110a may extend in the second direction (e.g., front and rear directions) and the third direction (e.g., left and right directions). Here, the second direction may intersect with the first direction (e.g., upward and downward directions), and the third direction may intersect with the first direction and second direction.

The first case part 110a may include a first receptor 112a. The first case part 110a may include a first extension 114a.

The first receptor 112a may face or be in contact with the second receptor 112b of the second case part 110b to provide a later described accommodating space AS (FIG. 6) where the electrode assembly 120 is accommodated.

The first receptor 112a may have a concave shape for accommodating at least a portion of the electrode assembly 120. As a result, the first receptor 112a may have a concave shape to accommodate at least a portion of the electrode assembly 120. Accordingly, a first predetermined space PS1 constituting at least a portion of the accommodating space AS (e.g., the lower half portion of the accommodating space) may be defined by the concave first receptor 112a (FIGS. 6 to 8).

However, it is not limited to this configuration. For example, the first receptor 112a may have a flat plate shape.

The first extension 114a extends outward from the first receptor 112a in at least one direction (e.g., front direction) or the other direction (e.g., rear direction) of the second direction. The first extension 114a may at least partially surround the first receptor 112a. The first extension 114a may be bonded to the second extension 114b of the second case part 110b.

The first receptor 112a may protrude further in the other direction of the first direction (e.g., downward direction) than the first extension 114a. For example, the first receptor 112a may have a concave shape to define the first predetermined space PS1 such that the first receptor 112a protrudes further in the other direction of the first direction than the first extension 114a.

### [Second Case Part]

The second case part 110b may be placed at one side (e.g., upper side) of the first case part 110a in the first direction. The second case part 110b may cover the first case part 110a (FIGS. 3 to 6 and 8).

The second case part 110b may include a second receptor 112b. The second case part 110b may include a second extension 114b.

The second receptor 112b may face or be in contact with the first receptor 112a of the first case part 110a to provide a later described accommodating space AS (FIG. 6) where the electrode assembly 120 is accommodated.

The width W1 of the accommodating space AS in the second direction may be larger than the width W2 of the electrode assembly 120 in the second direction. Accordingly, at least a portion of the one side (e.g., front side) surface end E1 or the other side (e.g., rear side) surface end E2 in the second direction of the one side surface (e.g., upper side surface) of the second receptor 112b in the first direction may not be supported in the first direction (FIG. 6).

For example, since the width W1 of the accommodating space AS in the second direction is larger than the width W2 of the electrode assembly 120 in the second direction, the electrode assembly 120 is spaced apart, in the second direction, from one end (e.g., front end) of the second receptor 112b by a distance D1 and the other end (e.g., rear end) of the second receptor 112b by distance D2 (FIG. 6). Here, the distances D1 and D2 may be greater than the thickness of the second receptor 112b. Accordingly, a portion corresponding to a section in the second direction from one end of one side ends E1 in the second direction of one side surface of the second receptor 112b to the distance D1 and a portion corresponding to a section from the other end of the other side end E2 in the second direction to the distance D2 may not be supported in the first direction by the electrode assembly 120 (FIG. 6).

As described above, since at least a portion of the one side end E1 or the other side end E2 in the second direction of the one side surface of the second receptor 112b in the first direction is not supported in the first direction, the one end or the other end of the second receptor 112b in the second direction may be easily deformed when the one end or the other end of the second receptor 112b in the second direction is pressed by the first frame 210 toward the other direction of the first direction (e.g., downward direction), which will be described later.

Meanwhile, the above-described problem may also occur in the above-described first receptor 112a. That is, when the width W1 of the accommodating space AS in the second direction is larger than the width W2 of the electrode assembly 120 in the second direction, at least a portion of the one side (e.g., front side) surface end E3 or the other side (e.g., rear side) surface ends E4 in the second direction of the other side surface of the first receptor 112a in the first direction(e.g., lower side surface) is also not supported by the electrode assembly 120. As a result, the one side end E3 or the other side ends E4 may be easily deformed when pressed toward the one direction of the first direction (e.g., upward) by the later-described second frame 220 (FIG. 6),which will be described later.

The second receptor 112b may have a concave shape to accommodate at least a portion of the electrode assembly 120. Accordingly, a second predetermined space PS2 constituting at least a portion (e.g., upper half portion of the accommodating space) of an accommodating space AS may be defined by the second receptor 112b (FIGS. 6 to 8). However, it is not limited to this configuration.

The second extension 114b extends outward from the second receptor 112b in at least one direction (e.g., front direction) or the other direction (e.g., rear direction) of the second direction. The second extension 114b may at least partially surround the second receptor 112b. The second extension 114b may be bonded to the first extension 114a of the first case part 110a.

The second receptor 112b may protrude further in the one direction of the first direction (e.g., upward direction) than the second extension 114b. For example, the second receptor 112b has a concave shape to define the second predetermined space PS2 such that the second receptor 112b protrudes further in the one direction of the first direction than the second extension 114b.

Meanwhile, one end or the other end of the second case part 110b in the second direction may be connected to the one end or the other end of the first case part 110a in the second direction (FIGS. 7 and 8). For example, as shown in FIG. 8, the other end of the second case part 110b in the second direction may be connected to the other end of the first case part 110a in the second direction.

The second case part 110b may be detachable from the first case part 110a except for the one end or the other end thereof in the second direction connected to the first case part 110a (FIGS. 7 and 8) .

The second case part 110b may be folded relative to the first case part 110a to face, in the first direction, and cover the first case part 110a (FIG. 8). For example, the one end or the other end of the second case part 110b in the second direction connected to the first case part 110a is folded in a manner that the second case part 110b faces, in the first direction, and covers the first case part 110a.

Here, as described above, when the second receptor 112b has a concave shape to accommodate at least a portion of the electrode assembly 120, and thus the second predetermined space PS2 constituting at least a portion of the accommodating space AS is defined, there may be interference between the second receptor 112b having a concave shape and the electrode assembly 120 as the second case part 110b is folded relative to the first case part 110a with the electrode assembly 120 disposed in the first receptor 112a. For example, as shown in FIG. 8, there may be interference between the second receptor 112b and the interfering portion F of the electrode assembly 120 located at the one side in the first direction and the one side in the second direction of the electrode assembly 120.

In order to prevent the second receptor 112b from interfering with the electrode assembly 120, the width W1' (FIGS. 6 and 8) of the second predetermined space PS2 in the second direction defined by second receptor 112b having a concave shape of the accommodating space AS must be sufficiently larger than the width W2 of the electrode assembly 120 in the second direction. However, when the width W1' of the second predetermined space PS2 in the second direction of the accommodating spaces AS is larger than the width W2 of the electrode assembly 120 in the second direction, at least a portion of the one side end E1 or the other side end E2 in the second direction of the one side surface of the second receptor 112b in the first direction is not supported by the electrode assembly 120 in the first direction (FIG. 6).

That is, since the width W1' of the predetermined space PS2 of the second receptor 112b in the second direction of the accommodating spaces AS must be larger than the width W2 of the electrode assembly 120 in the second direction in order to prevent interference between the second receptor 112b and the electrode assembly 120 when the second case part 110b connected to the end portion of the first case part 110a is folded to cover the first receptor 112a with the second receptor 112b, at least a portion of the one side end E1 or the other side end E2 in the second direction of the one side surface of the second receptor 112b in the first direction may not be supported in the first direction inevitably. A detailed description will be given later.

### [Electrode Assembly]

The electrode assembly 120 may be accommodated inside the battery case 100. Specifically, the electrode assembly 120 may be accommodated between the first case part 110a and the second case part 110b. For example, the electrode assembly 120 may be accommodated between the first receptor 112a and the second receptor 112b.

The electrode assembly 120 may include one or more electrodes (not shown) and one or more separators (not shown). The electrodes and separators may be stacked alternately in the first direction.

Each electrode and each separator may extend in the second and third directions. Accordingly, the electrode assembly 120 may extend in the second and third directions.

The electrode assembly 120 may include a pair of terminals 122. A pair of terminals 122 may protrude in the third direction.

### [Battery Cell Fixing Apparatus]

Referring to FIGS. 1 to 6, the battery cell fixing apparatus 200 according to one embodiment may include a first frame 210 and a second frame 220.

The battery cell fixing apparatus 200 may fix the battery cell 100. Accordingly, the battery cell fixing apparatus 200 may be used to stably transport the battery cell 100 to the work area of one or more processes or to fix the battery cell 100 in one or more processes (e.g., sealing process) and perform a predetermined work (e.g., sealing work).

Additionally, the battery cell fixing apparatus 200 may be used to maintain the correct shape of the battery case 110 with the electrode assembly 120 accommodated therein. For example, as shown in FIGS. 7 and 8, when the battery case 110 is folded to accommodate the electrode assembly 120 therein, the battery cell fixing apparatus 200 may be used to press and fix the battery case 110 such that the battery case 110 is completely folded and the correct shape is maintained with the electrode assembly 120 accommodated therein.

### [First Frame]

The first frame 210 is in contact with one side surface (e.g., upper side surface) in the first direction (e.g., upward and downward directions) of the battery case 110, and press toward the other direction of the first direction (e.g., downward direction) and fix the battery cell 100.

Here, pressure may include relative pressure. The same applies hereinafter. For example, when the second frame 220 presses the battery cell 100 in the one direction of the first direction, the first frame 210 relatively press the battery cell 100 toward the other direction of the first direction even with the first frame 210 fixed.

Here, the first frame 210 is not in contact with the one side (e.g., front side) surface end E1 or the other side (e.g., rear side) surface end E2 in the second direction (e.g., front and rear directions) intersecting with the first direction of the one side surface of the battery case 110 in the first direction such that the first frame 210 may not press toward the other direction of the first direction and fix the one side end E1 or the other side end E2 in the second direction of the one side surface of the battery case 110 in the first direction.

For example, the first frame 210 may be in contact with the one side surface of the second receptor 112b in the first direction of the second case part 110b of the battery case 110 constituting the one side surface of the battery case 110 in the first direction such that the first frame 210 may press toward the other direction of the first direction and fix the second receptor 112b and the battery cell 100. Here, the first frame 210 may not be in contact with the one side end E1 or the other side end E2 in the second direction of one side surface of the second receptor 112b in the first direction such that the first frame 210 not press toward the other direction of the first direction and fix the one side end E1 or the other side end E2 in the second direction of the one side surface of the second receptor 112b in the first direction (FIGS. 5 and 6).

Accordingly, since the first frame 210 presses, toward the other direction of the first direction, the center portion in the second direction between the one side end E1 and the other side end E2 in the second direction of the one side surface of the battery case 110 in the first direction, the battery cell 100 may be stably fixed. Thus, i) the battery cell 100 may be stably transported to the work area of one or more processes, ii) certain tasks may be smoothly performed in one or more processes with the battery cell 100 stably fixed, and iii) the correct shape of the battery case 110 may be stably maintained while the electrode assembly 120 is accommodated inside the battery case 110.

In addition, since the first frame 210 does not press, toward the other direction of the first direction, one side end E1 or the other side end E2 in the second direction of the one side surface of the battery case 110 in the first direction, the deformation of the edge portion of the one side or the other side of the battery case 110 in the second direction caused by the pressure applied by the first frame 210, which may not be restored even after the pressure is stopped, may be prevented. In particular, when the edge portion of the battery case 110 is subjected to pressure by the battery cell fixing apparatus 200, the edge portion of the battery case 110 may be deformed to an extent that makes the restoration of the edge portion of the battery case 110 to its original shape difficult due to design tolerances, assembly tolerances, or alignment errors of the battery cell 100 or the battery cell fixing apparatus 200. Thus, it is preferable that the edge portion of the battery case 110 is not subjected to pressure by the battery cell fixing apparatus 200.

For example, when the center portion in the second direction between the one side end E1 and the other side end E2 in the second direction of the one side surface of the second receptor 112b in the first direction is pressed by the first frame 210, the edge portion of the one side or the other side of the second receptor 112b in the second direction is not pressed by the first frame 210 despite the temporary deformation of the edge portion of the one side or the other side of the second receptor 112b in the second direction, to which the one side end E1 or the other side end E2 in the second direction of the one side surface of the second receptor 112b in the first direction belongs, by being bent due to design tolerance, assembly tolerance or alignment error, etc. As a result, the edge portion of the one side or the other side of the second receptor 112b in the second direction may be restored to its original and correct shape when the pressure against the center portion in the second direction of the one side surface of the second receptor 112b in the first direction is applied.

Therefore, exterior defects of the battery case 110 due to the pressure applied by the battery cell fixing apparatus 200 may be prevented. As a result, the defect rate of the battery cell 100 may be reduced, thereby reducing the manufacturing cost of the battery cell 100.

Additionally, since the first frame 210 does not apply pressure to the one side end E1 or the other side end E2 in the second direction of the one side surface of the battery case 110 in the first direction, exterior defects of the battery case 110 due to the pressure applied by the battery cell fixing apparatus 200 may be prevented despite the increase in the thickness of the battery case 110. Accordingly, exterior defects may be prevented and the durability of the battery case 110 may be improved.

Detailed description is as follows. In general, with the same amount of pressure applied to the battery case 110, the degree to which the deformed battery case 110 is restored back to its original shape decreases as the thickness of the battery case 110 increases. However, according to the present invention, since the first frame 210 does not press the one side end E1 or the other side end E2 in the second direction of the one side surface of the battery case 110 in the first direction, the problem of the edge portion of one side or the other side of the battery case 110 in the second direction, to which the one side end E1 or the other side end E2 in the second direction of the one side surface of the battery case 110 in the first direction belongs, not being restored after deformation due to the pressure applied by the first frame 210 may not occur.

Here, as described above, the width W1 of the accommodating space AS in the second direction may be larger than the width W2 of the electrode assembly 120 in the second direction (FIG. 6). As a result, at least a portion of the one side end E1 or the other side end E2 in the second direction of the one side surface of the second receptor 112b in the first direction may not be supported in the first direction.

Accordingly, even when at least a portion of the one side end E1 or the other side end E2 in the second direction of the one side surface of the second receptor 112b in the first direction is not supported in the first direction, the first frame 210 does not press, toward the other direction of the first direction, the edge portion of the one side or the other side of the second receptor 112b in the second direction. Thus, exterior defects of the battery case 110 due to the pressure applied by the battery cell fixing apparatus 200 may be prevented.

On the other hand, when at least a portion of the edge of the one side or the other side of the second receptor 112b in the second direction, to which the one side end E1 or the other side end E2 in the second direction of the one side surface of the second receptor 112b in the first direction belongs, is pressed toward the other direction of the first direction by the first frame 210, the edge portion may be deformed to an extent that makes the restoration of the edge portion to its original shape difficult due to lack of support by the electrode assembly 120.

Here, as described above, the width W1' of the second predetermined space PS2 in the second direction among the accommodating spaces AS may be larger than the width W2 of the electrode assembly 120 in the second direction to prevent interference between the second receptor 112b and the electrode assembly 120 when the second case part 110b may be bent relative to the first case part 110a with the electrode assembly 120 disposed in the first receptor 112a (FIG. 6, FIG. 8). As a result, at least a portion of the one side end E1 or the other side end E2 in the second direction of the one side surface of the second receptor 112b in the first direction is not supported by the electrode assembly 120 in the first direction.

Accordingly, in order to prevent interference between the second receptor 112b and the electrode assembly 120 when the second case part 110b connected to the end portion of the first case part 110a is folded to cover the first receptor 112a with the second receptor 112b, the width W1' of the predetermined space PS2 of the second receptor 112b in the second direction of the accommodating spaces AS is selected to be larger than the width W2 of the electrode assembly 120 in the second direction. As a result, even when at least a portion of the edge portion of the one side or the other side of the second receptor 112b in the second direction is not supported in the first direction by the electrode assembly 120, the first frame 210 does not press, toward the other direction of the first direction, the edge portion of the one side or the other side of the second receptor 112b in the second direction, thereby preventing exterior defects of the battery case 110 due to the pressure applied by the battery cell fixing apparatus 200.

Meanwhile, the length in the second direction of the one side end E1 or the other side end E2 in the second direction of the one side surface of the battery case 110 in the first direction that is not in contact with the first frame 210 is equal to or greater than 1/40 and equal to or less than 1/5 of the length in the second direction of the one side surface of the battery case 110 in the first direction.

For example, the length in the second direction of the one side end E1 or the other side end E2 in the second direction of the one side surface of the second receptor 112b in the first direction that is not in contact with the first frame 210 is equal to or greater than 1/40 and equal to or less than 1/5 of the length in the second direction of the one side surface of the second receptor 112b in the first direction.

Accordingly, since the length in the second direction of the one side end E1 or the other side end E2 in the second direction of the one side surface of the battery case 110 in the first direction that is not in contact with the first frame 210 is not less than 1/40 of the length in the second direction of the one side surface of the battery case 110 in the first direction, the area of the edge portion of the one side or the other side of the battery case 110 in the second direction that is not pressed by the first frame 210 is sufficiently secured to prevent exterior defects of the battery case 110. In addition, since the length in the second direction of the one side end E1 or the other side end E2 in the second direction of the one side surface of the battery case 110 in the first direction that is not in contact with the first frame 210 is not greater than 1/5 of the length in the second direction of the one side surface of the battery case 110 in the first direction, the area of the battery case 110 that may be pressed by the first frame 210 is sufficiently secured to stably fix the battery cell 100.

The first frame 210 may include the first base 212. The first frame 210 may include a first support 214. The description of the first base 212 and the first support 214 is as follows.

### [First Base]

The first base 212 may be disposed at one side of the battery cell 100 in the first direction.

The first base 212 may include the first pressure surface S1 and the first anti-pressure groove H1. The first base 212 may include a third anti-pressure groove H3 (FIGS. 2 and 4).

The first pressure surface S1 may be in contact with one side surface of the battery case 110 in the first direction. For example, the first pressure surface S1 may be in contact with the one side surface of the second receptor 112b in the first direction.

The first frame 210 may press toward the other direction of the first direction and fix the battery cell 100 through the first pressure surface S1. For example, through the first pressure surface S1, the first frame 210 may press toward the other direction of the first direction and fix the second receptor 112b of the battery cell 100.

The first anti-pressure groove H1 may be provided at one side or the other side of the first pressure surface S1 in the second direction, and be recessed in one direction of the first direction.

The first anti-pressure groove H1 may face, in the first direction, the one side end E1 or the other side end E2 in the second direction of the one side surface of the battery case 110 in the first direction. For example, the first anti-pressure groove H1 may face, in the first direction, the one side end E1 or the other side end E2 in the second direction of the one side surface of the second receptor 112b in the first direction.

The first frame 210 may not press toward the other direction of the first direction and not fix the one side end E1 or the other side end E2 in the second direction of the one side surface of the battery case 110 in the first direction by not being in contact with the one side end E1 or the other side end E2 in the second direction of the one side surface of the battery case 110 in the first direction by the first anti-pressure groove H1. For example, The first frame 210 may not press toward the other direction of the first direction and not fix the one side end E1 or the other side end E2 in the second direction of the one side surface of the second receptor 112b in the first direction by not being in contact with the one side end E1 or the other side end E2 in the second direction of the one side surface of the second receptor 112b in the first direction by the first anti-pressure groove H1.

Accordingly, the first frame 210 which fixes the battery cell 100 by pressing the battery case 110 and not pressing and not fixing the edge portion of the one side or the other side of the battery case 110 in the second direction, may be easily manufactured at low cost with a simple configuration.

In addition, by providing the first anti-pressure groove H1 of the first frame 210 to face the edge portion of the one side or the other side of the battery case 110 in the second direction, the edge portion of the one side or the other side of the battery case 110 may be covered by the first frame 210 even when the edge portion is not pressed and not fixed by the first frame 210 and the second frame 220. Thus, the edge portion of one side or the other side of the battery case 110 in the second direction that is not pressed and not fixed by the first frame 210 may also be protected from external shocks, etc. by the first frame 210, thereby lowering the defect rate of the battery cell 100 and reducing the manufacturing cost of the battery cell 100.

Meanwhile, the first frame 210 may not press toward the other direction of the first direction and not fix the one side end E1 and the other side end E2 of the one side surface of the battery case 110 in the first direction by not being contact with the one side end E1 and the other side end E2 in the second direction of the one side surface of the battery case 110 in the first direction.

Specifically, the first base 212 may include a pair of first anti-pressure grooves H1. The pair of first anti-pressure grooves H1 may be provided at the one side and the other side of the first pressure surface S1 in the second direction, respectively, recessed in the one direction of the first direction. The pair of the first anti-pressure grooves H1 may face, in the first direction, the one side end E1 and the other side end E2 in the second direction of the one side surface of the battery case 110 in the first direction, respectively.

Here, the first frame 210 may not press toward the other direction of the first direction and not fix the one side end E1 and the other side end E2 in the second direction of the one side surface of the battery case 110 in the first direction by not being in contact with the one side end E1 and the other side end E2 in the second direction of the one side surface of the battery case 110 in the first direction by pair of the first anti-pressure grooves H1.

Accordingly, since the first frame 210 does not press, toward the other direction of the first direction, one side end E1 and the other side end E2 in the second direction of the one side surface of the battery case 110 in the first direction, the deformation of the two edge portions of the battery case 110 in the second direction caused by the pressure applied by the first frame 210, which may not be restored even after the pressure is stopped, may be all prevented. Therefore, exterior defects of the battery case 110 due to the pressure applied by the battery cell fixing apparatus 200 may be prevented. As a result, the defect rate of the battery cell 100 may be reduced, thereby reducing the manufacturing cost of the battery cell 100.

In addition, the first frame 210, which fixes the battery cell 100 by pressing the battery case 110 while not pressing and not fixing the two edge portions of the battery case 110 in the second direction, may be easily manufactured at low cost with a simple configuration.

In addition, since a pair of first anti-pressure grooves H1 of the first frame 210 are provided to face the two edge portions of the battery case 110 in the second direction, the two edge portions of the battery case 110 in the second direction may be covered by the first frame 210 even when the two edge portions of the battery case 110 in the second direction is not pressed and not fixed by the first frame 210. Thus, two edge portion of one side or the other side of the battery case 110 in the second direction that is not pressed and not fixed by the first frame 210 may also be protected from external shocks, etc. by the first frame 210, thereby lowering the defect rate of the battery cell 100 and reducing the manufacturing cost of the battery cell 100.

When the one side surface of the battery case 110 in the first direction extends in a third direction intersecting with the first and the second directions, the first pressure surface S1 and the first anti-pressure groove H1 may extend in the third direction along the one side surface of the battery case 110 in the first direction (FIGS. 1 to 4).

For example, when the one side surface of the second receptor 112b in the first direction extends in the third direction, the first pressure surface S1 and the first anti-pressure groove H1 may extend in the third direction along the one side surface of the second receptor 112b in the first direction (FIGS. 1 to 4).

Accordingly, when the edge portion of one side or the other side of the battery case 110 in the second direction, to which the one side end E1 or the other side end E2 in the second direction of the one side surface of the battery case 110 in the first direction belongs, extends in the third direction, the entirety of the edge portion of one side or the other side of the battery case 110 in the second direction extending in the third direction may be prevented from being pressed by the first frame 210. Accordingly, the deformation of the entirety of the edge portion of the one side or the other side of the battery case 110 in the second direction, which may not be restored, may be prevented. Therefore, exterior defects of the battery case 110 due to the pressure applied by the battery cell fixing apparatus 200 may be prevented. As a result, the defect rate of the battery cell 100 may be reduced, thereby reducing the manufacturing cost of the battery cell 100.

The third anti-pressure groove H3 may be provided at one side or the other side of the first pressure surface S1 in the third direction, recessed in one direction of the first direction.

The third anti-pressure groove H3 may face, in the first direction, one side end or the other side end in the third direction of the one side surface of the battery case 110 in the first direction. For example, the third anti-pressure groove H3 may face, in the first direction, one side end or the other side end in the third direction of the one side surface of the second receptor 112b in the first direction.

The first frame 210 may not press toward the other direction of the first direction and not fix the one side end or the other side end in the third direction of the one side surface of the battery case 110 in the first direction by not being in contact with the one side end or the other side end in the third direction of the one side surface of the battery case 110 in the first direction by the third anti-pressure groove H3. For example, The first frame 210 may not press toward the other direction of the first direction and not fix the one side end or the other side end in the third direction of the one side surface of the second receptor 112b in the first direction by not being in contact with the one side end or the other side end in the third direction of the one side surface of the second receptor 112b in the first direction by the third anti-pressure groove H3.

Accordingly, since the first frame 210 does not press, toward the other direction of the first direction, the one side end and the other side end in the third direction of the one side surface of the battery case 110 in the first direction, the deformation of the edge portion of the one side or the other side of the battery case 110 in the third direction caused by the pressure applied by the first frame 210, which may not be restored even after the pressure is stopped, may be prevented.

In addition, the edge portion of the one side or the other side of the battery case 110 may be covered by the first frame 210 even when the edge portion is not pressed and not fixed by the first frame 210 and the second frame 220. Thus, the edge portion of one side or the other side of the battery case 110 in the third direction that is not pressed and not fixed by the first frame 210 may also be protected from external shocks, etc. by the first frame 210, thereby lowering the defect rate of the battery cell 100 and reducing the manufacturing cost of the battery cell 100.

### [First Support]

The first support 214 may be disposed at one side of the first anti-pressure groove H1 in the second direction provided at one side of the first pressure surface S1 in the second direction, or at the other side of the first anti-pressure groove H1 in the second direction provided at the other side of the first pressure surface S1 in the second direction.

The first support 214 may be coupled to first base 212.

The first support 214 may face, in the second direction, or in contact with one side surface or the other side surface of the battery cell 100 in the second direction. For example, the first support 214 may face, in the second direction, or in contact with the one side surface or the other side surface of the second receptor 112b in the second direction.

Accordingly, the battery cell 100 may be prevented from moving in one direction and the other direction of the second direction or from breaking away from the first frame 210 in one direction and the other direction of the second direction.

In addition, the first frame 210, which fixes the battery cell 100 by pressing the battery case 110 while not pressing and not fixing the edge portion of one side or the other side of the battery case 110 in the second direction and prevents the battery cell 100 from moving in one direction or the other direction of the second direction or from breaking away from the first frame 210 in one direction or the other direction of the second direction, may be easily manufactured at low cost with a simple configuration.

The first support 214 may be in contact with one side surface of the second extension 114b in the first direction.

The first frame 210 may press toward the other direction of the first direction and fix the second extension 114b of the battery cell 100 through the first support 214. Here, as described above, the first frame 210 may press toward the other direction of the first direction and fix the second receptor 112b of the battery cell 100 through the first pressure surface S1 of the first base 212.

Accordingly, since the first frame 210 presses both the second receptor 112b and the second extension 114b of the battery cell 100 in the other direction of the first direction, the first frame 210 may stably fix the battery cell 100 and the battery case 110 may maintain the correct shape with the electrode assembly 120 accommodated inside the battery case 110.

In addition, the first frame 210, which may stably fix the battery cell 100 and allow the battery case 110 to maintain the correct shape with the electrode assembly 120 accommodated inside the battery case 110, may be easily manufactured at low cost with a simple configuration.

Two first supports 214 may be provided. The two first supports 214 may include the first one side support 214a and the first other side support 214b (FIGS. 5 and 6). Here, as described above, the first base 212 may include a pair of first anti-pressure grooves H1.

The first one side support 214a may be disposed at one side of the first anti-pressure groove H1 in the second direction provided at one side of the first pressure surface S1 in the second direction of the pair of first anti-pressure groove H1. The first one side support 214a may be coupled to the first base 212, and may face, in the second direction, or be in contact with the one side surface of the battery cell 100 in the second direction (FIGS. 5 and 6).

The first other side support 214b may be disposed at the other side of the first anti-pressure groove H1 in the second direction provided at other side of the first pressure surface S1 in the second direction of the pair of first anti-pressure groove H1. The first other side support 214b may be coupled to the first base 212, and face, in the second direction, or be in contact with the other side surface of the battery cell 100 in the second direction (FIGS. 5 and 6).

Accordingly, the battery cell 100 may be prevented from moving in one direction and the other direction of the second direction or from breaking away from the first frame 210 in one direction and the other direction of the second direction.

In addition, the first frame 210, which fixes the battery cell 100 by pressing the battery case 110 while not pressing and not fixing the two edge portions of the battery case 110 in the second direction and prevents the battery cell 100 from moving in one direction and the other direction of the second direction or from breaking away from the first frame 210 in one direction and the other direction of the second direction, may be easily manufactured at low cost with a simple configuration.

### [Second Frame]

The second frame 220 may be disposed to face the first frame 210 with the battery cell 100 therebetween. The second frame 220 may be disposed at the other side of the first frame 210 in the first direction.

The second frame 220 is in contact with the other side surface (e.g., lower side surface) of the battery case 110 in the first direction to press in the one direction (e.g., upward direction) of the first direction and fix the battery cell 100.

Here, the other side surface of the battery case 110 in the first direction may be located at the other side in the first direction of the aforementioned one side surface of the battery case 110 in the first direction. The same applies hereinafter.

Here, pressure may include relative pressure. The same applies hereinafter. For example, when the first frame 210 presses the battery cell 100 in the other direction of the first direction, the second frame 220 relatively press the battery cell 100 toward the one direction of the first direction even with the second frame 220 fixed.

Here, the second frame 220 is not in contact with the one side end E3 or the other side end E4 in the second direction of the other side surface of the battery case 110 in the first direction such that the second frame 220 may not press, toward the one direction of the first direction, and not fix the one side end E3 or the other side end E4 in the second direction of the other side surface of the battery case 110 in the first direction.

For example, the second frame 220 may be in contact with the other side surface of the first receptor 112a in the first direction of the first case part 110a of the battery case 110 constituting the other side surface of the battery case 110 in the first direction such that the second frame 220 may press toward the one direction of the first direction and fix the first receptor 112a and the battery cell 100. Here, the second frame 220 may not be in contact with the one side end E3 or the other side end E4 in the second direction of the other side surface of the first receptor 112a in the first direction such that the second frame 220 not press, toward the one direction of the first direction, and not fix the one side end E3 or the other side end E4 in the second direction of the other side surface of the first receptor 112a in the first direction (FIGS. 5 and 6).

Here, as described above, the first frame 210 may be in contact with one side surface in a first direction of the battery case 110 to press toward other direction of the first direction and fix the battery cell 100 while not pressing toward the other direction of the first direction and not fixing the one side end E1 or the other side end E2 in the second direction by not being in contact with the one side end E1 or the other side end E2 in a second direction intersecting with the first direction of one side surface in the first direction of the battery case.

Accordingly, as the first frame 210 and the second frame 220 presses the center portion in the second direction between one side ends E1 and E3 and the other side ends E2 and E4 in the second direction of the one side surface and the other side surface of the battery case 110 in the first direction, the battery cell 100 may be stably fixed.

In addition, since the first frame 210 and the second frame 220 does not press, toward the other direction and/or one direction of the first direction, the one side ends E1 and E3 or the other side ends E2 and E4 in the second direction of the one side surface and the other side surface of the battery case 110 in the first direction, the deformation of the edge portion of the one side or the other side of the battery case 110 in the second direction caused by the pressure applied by the first frame 210 and the second frame 220, which may not be restored even after the pressure is stopped, may be prevented.

Therefore, exterior defects of the battery case 110 due to the pressure applied by the battery cell fixing apparatus 200 may be prevented. As a result, the defect rate of the battery cell 100 may be reduced, thereby reducing the manufacturing cost of the battery cell 100.

In particular, even when one of the first frame 210 and the second frame 220 is fixed and the fixed frame relatively applies pressure to the battery cell 100 due to the pressure of the other frame, the fixed first frame 210 or the second frame 220 does not press the edge portion of one side or the other side of the battery case 110 in the second direction. Thus, exterior defects of the battery case 110 caused by the pressure applied by the battery cell fixing apparatus 200 may be prevented.

In addition, since the first frame 210 and the second frame 220 does not press, toward the other direction and/or one direction of the first direction, the one side ends E1 and E3 or the other side ends E2 and E4 in the second direction of the one side surface and the other side surface of the battery case 110 in the first direction, exterior defects of the battery case 110 due to the pressure applied by the battery cell fixing apparatus 200 may be prevented despite the increase in the thickness of the battery case 110. Accordingly, exterior defects may be prevented and the durability of the battery case 110 may be improved.

Detailed description is as follows. As described above, in general, with the same amount of pressure applied to the battery case 110, the degree to which the deformed battery case 110 is restored back to its original shape decreases as the thickness of the battery case 110 increases. However, according to the present invention, since the first frame 210 and the second frame 220 do not press, toward the other direction and/or the one direction of the first direction, the one side ends E1 and E3 or the other side ends E2 and E4 in the second direction of the one side surface and the other side surface of the battery case 110 in the first direction, the problem of the edge portion of one side or the other side of the battery case 110 in the second direction not being restored after deformation due to the pressure applied by the first frame 210 may not occur.

Here, the other end in the second direction of the one side end E1 in the second direction not in contact with the first frame 210 of the one side surface of the battery case 110 in the first direction and the other end in the second direction of the one side end E3 in the second direction of the other side surface of the battery case 110 in the first direction not in contact with the second frame 220 may meet an imaginary straight line L1 extending in the first direction, or the one end in the second direction of the other side end E2 in the second direction of the one side surface of the battery case 110 in the first direction not in contact with the first frame 210 and the one end in the second direction of the other side end E4 in the second direction of the other side surface of the battery case 110 in the first direction not in contact with the second frame 220 may meet an imaginary straight line L2 extending in the first direction (FIGS. 5 and 6).

Accordingly, the boundaries where the first frame 210 and the second frame 220 press, toward the other direction and one direction of the first direction, the one side surface and the other side surface of the battery case 110 in the first direction, respectively, may correspond to each other. Therefore, since the areas where the battery cell fixing apparatus 200 presses the one side surface and the other side surface of the battery case 110 in the first direction correspond to each other, the battery cell fixing apparatus 200 may stably fix the battery cell 100.

Meanwhile, the length in the second direction of the one side end E3 or the other side end E4 in the second direction of the other side surface of the battery case 110 in the first direction that is not in contact with the second frame 220 is equal to or greater than 1/40 and equal to or less than 1/5 of the length in the second direction of the other side surface of the battery case 110 in the first direction.

For example, the length in the second direction of the one side end E3 or the other side end E4 in the second direction of the other side surface of the first receptor 112a in the first direction that is not in contact with the second frame 220 is equal to or greater than 1/40 and equal to or less than 1/5 of the length in the second direction of the other side surface of the first receptor 112a in the first direction.

The second frame 220 may include the second base 222. The second frame 220 may include a second support 224. The description of the second base 222 and the second support 224 is as follows.

### [Second Base]

The second base 222 may be disposed at the other side of the battery cell 100 in the first direction.

The second base 222 may include the second pressure surface S2 and the second anti-pressure groove H2. The second base 222 may include a fourth anti-pressure groove H4 (FIGS. 1 and 3).

The second pressure surface S2 may be in contact with the other side surface of the battery case 110 in the first direction. For example, the second pressure surface S2 may be in contact with the other side surface of the first receptor 112a in the first direction.

The second frame 220 may press toward the one direction of the first direction and fix the battery cell 100 through the second pressure surface S2. For example, through the second pressure surface S2, the second frame 220 may press toward the one direction of the first direction and fix the first receptor 112a of the battery cell 100.

The second anti-pressure groove H2 may be provided at one side or the other side of the second pressure surface S2 in the second direction, and be recessed in the other direction of the first direction.

The second anti-pressure groove H2 may face, in the first direction, the one side end E3 or the other side end E4 in the second direction of the other side surface of the battery case 110 in the first direction. For example, the second anti-pressure groove H2 may face, in the first direction, the one side end E3 or the other side end E4 in the second direction of the other side surface of the first receptor 112a in the first direction.

The second frame 220 may not press toward the one direction of the first direction and not fix the one side end E3 or the other side end E4 in the second direction of the other side surface of the battery case 110 in the first direction by not being in contact with the one side end E3 or the other side end E4 in the second direction of the other side surface of the battery case 110 in the first direction by the second anti-pressure groove H2. For example, The second frame 220 may not press toward the one direction of the first direction and not fix the one side end E3 or the other side end E4 in the second direction of the other side surface of the first receptor 112a in the first direction by not being in contact with the one side end E3 or the other side end E4 in the second direction of the other side surface of the first receptor 112a in the first direction by the second anti-pressure groove H2.

Accordingly, the second frame 220 which fixes the battery cell 100 by pressing the battery case 110 and not pressing and not fixing the edge portion of the one side or the other side of the battery case 110 in the second direction, may be easily manufactured at low cost with a simple configuration.

In addition, by providing the second anti-pressure groove H2 of the second frame 220 to face the edge portion of the one side or the other side of the battery case 110 in the second direction, the edge portion of the one side or the other side of the battery case 110 may be covered by the second frame 220 even when the edge portion is not pressed and not fixed by the second frame 220. Thus, the edge portion of one side or the other side of the battery case 110 in the second direction that is not pressed and not fixed by the second frame 220 may also be protected from external shocks, etc. by the second frame 220, thereby lowering the defect rate of the battery cell 100 and reducing the manufacturing cost of the battery cell 100.

Meanwhile, the second frame 220 may not press toward the one direction of the first direction and not fix the one side end E3 and the other side end E4 of the other side surface of the battery case 110 in the first direction by not being contact with the one side end E3 and the other side end E4 in the second direction of the other side surface of the battery case 110 in the first direction.

Specifically, the second base 222 may include a pair of second anti-pressure grooves H2. The pair of second anti-pressure grooves H2 may be provided at the one side and the other side of the second pressure surface S2 in the second direction, respectively, recessed in the other direction of the first direction. The pair of the second anti-pressure grooves H2 may face, in the first direction, the one side end E3 and the other side end E4 in the second direction of the other side surface of the battery case 110 in the first direction, respectively.

Here, The second frame 220 may not press toward the one direction of the first direction and not fix the one side end E3 and the other side end E4 in the second direction of the other side surface of the battery case 110 in the first direction by not being in contact with the one side end E3 and the other side end E4 in the second direction of the other side surface of the battery case 110 in the first direction by pair of the second anti-pressure grooves H2.

Accordingly, since the second frame 220 does not press, toward the one direction of the first direction, one side end E3 and the other side end E4 in the second direction of the other side surface of the battery case 110 in the first direction, the deformation of the two edge portions of the battery case 110 in the second direction caused by the pressure applied by the second frame 220, which may not be restored even after the pressure is stopped, may be all prevented. Therefore, exterior defects of the battery case 110 due to the pressure applied by the battery cell fixing apparatus 200 may be prevented. As a result, the defect rate of the battery cell 100 may be reduced, thereby reducing the manufacturing cost of the battery cell 100.

In addition, the second frame 220, which fixes the battery cell 100 by pressing the battery case 110 while not pressing and not fixing the two edge portions of the battery case 110 in the second direction, may be easily manufactured at low cost with a simple configuration.

In addition, since a pair of second anti-pressure grooves H2 of the second frame 220 are provided to face the two edge portions of the battery case 110 in the second direction, the two edge portions of the battery case 110 in the second direction may be covered by the second frame 220 even when the two edge portions of the battery case 110 in the second direction is not pressed and not fixed by the second frame 220. Thus, two edge portion of one side or the other side of the battery case 110 in the second direction that is not pressed and not fixed by the second frame 220 may also be protected from external shocks, etc. by the second frame 220, thereby lowering the defect rate of the battery cell 100 and reducing the manufacturing cost of the battery cell 100.

When the other side surface of the battery case 110 in the first direction extends in the third direction, the second pressure surface S2 and the second anti-pressure groove H2 may extend in the third direction along the other side surface of the battery case 110 in the first direction (FIGS. 1 to 4).

For example, when the other side surface of the first receptor 112a in the first direction extends in the third direction, the second pressure surface S2 and the second anti-pressure groove H2 may extend in the third direction along the other side surface of the first receptor 112a in the first direction (FIGS. 1 to 4).

The fourth anti-pressure groove H4 may be provided at one side or the other side of the second pressure surface S2 in the third direction, recessed in the other direction of the first direction.

The fourth anti-pressure groove H4 may face, in the first direction, one side end or the other side end in the third direction of the other side surface of the battery case 110 in the first direction. For example, the fourth anti-pressure groove H4 may face, in the first direction, one side end or the other side end in the third direction of the other side surface of the first receptor 112a in the first direction.

The second frame 220 may not press toward the one direction of the first direction and not fix the one side end or the other side end in the third direction of the other side surface of the battery case 110 in the first direction by not being in contact with the one side end or the other side end in the third direction of the other side surface of the battery case 110 in the first direction by the fourth anti-pressure groove H4. For example, The second frame 220 may not press toward the one direction of the first direction and not fix the one side end or the other side end in the third direction of the other side surface of the first receptor 112a in the first direction by not being in contact with the one side end or the other side end in the third direction of the other side surface of the first receptor 112a in the first direction by the fourth anti-pressure groove H4.

Accordingly, since the second frame 220 does not press, toward the one direction of the first direction, the one side end and the other side end in the third direction of the other side surface of the battery case 110 in the first direction, the deformation of the edge portion of the one side or the other side of the battery case 110 in the third direction caused by the pressure applied by the second frame 220, which may not be restored even after the pressure is stopped, may be prevented.

In addition, the edge portion of the one side or the other side of the battery case 110 may be covered by the second frame 220 even when the edge portion is not pressed and not fixed by the second frame 220. Thus, the edge portion of one side or the other side of the battery case 110 in the third direction that is not pressed and not fixed by the second frame 220 may also be protected from external shocks, etc. by the second frame 220, thereby lowering the defect rate of the battery cell 100 and reducing the manufacturing cost of the battery cell 100.

### [Second Support]

The second support 224 may be disposed at one side of the second anti-pressure groove H2 in the second direction provided at one side of the second pressure surface S2 in the second direction, or at the other side of the second anti-pressure groove H2 in the second direction provided at the other side of the second pressure surface S2 in the second direction.

The second support 224 may be coupled to second base 222.

The second support 224 may face, in the second direction, or in contact with the one side surface or the other side surface of the battery cell 100 in the second direction. For example, the second support 224 may face, in the second direction, or in contact with the one side surface or the other side surface of the first receptor 112a in the second direction.

The second support 224 may be in contact with the other side surface of the first extension 114a in the first direction.

The second frame 220 may press toward one direction of the first direction and fix the first extension 114a of the battery cell 100 through the second support 224.

The second support 224 may also be in contact with the first support 214 of the first frame 210 in the first direction.

Two second supports 224 may be provided. The two second supports 224 may include the second one side support 224a and the second other side support 224b (FIGS. 5 and 6). Here, as described above, the second base 222 may include a pair of second anti-pressure grooves H2.

The second one side support 224a may be disposed at one side of the second anti-pressure groove H2 in the second direction provided at one side of the second pressure surface S2 in the second direction of the pair of second anti-pressure groove H2. The second one side support 224a may be coupled to the second base 222, and may face, in the second direction, or be in contact with the one side surface of the battery cell 100 in the second direction (FIGS. 5 and 6).

The second other side support 224b may be disposed at the other side of the second anti-pressure groove H2 in the second direction provided at other side of the second pressure surface S2 in the second direction of the pair of second anti-pressure groove H2. The second other side support 224b may be coupled to the second base 222, and face, in the second direction, or be in contact with the other side surface of the battery cell 100 in the second direction (FIGS. 5 and 6).

Meanwhile, matters regarding the first frame 210, the first base 212 and the first support 214 may be inferred and applied to the second frame 220, the second base 222 and the second support 224.

It should be understood that the described embodiments are illustrative in all respects and not restrictive, and the scope of the present invention will be indicated by the following claims rather than the described detailed description. And the meaning and scope of the claims to be described later should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

**[DESCRIPTION OF REFERENCE NUMERALS]**

| | | | |
|---|---|---|---|
| 100: | battery cell | | |
| 110: | battery case | | |
| 110a: | first case part | 110b: | second case part |
| 112a: | first receptor | 112b: | second receptor |
| 114a: | first extension | 114b: | second extension |
| 120: | electrode assembly | 122: | terminal |
| 200: | battery cell fixing apparatus | | |
| 210: | first frame | 220: | second frame |
| 212: | first base | 222: | second base |
| 214: | first support | 224: | second support |
| S1: | first pressure surface | S2: | second pressure surface |
| H1: | first anti-pressure groove | H2: | second anti-pressure groove |
| H3: | third anti-pressure groove | H4: | fourth anti-pressure groove |

## Claims

1. A battery cell fixing apparatus for fixing a battery cell 100 comprising a battery case 110 and an electrode assembly 120 accommodated in the battery case 110, the battery cell fixing apparatus comprising:
a first frame 210 configured to be in contact with one side surface in a first direction of the battery case 110,
wherein the first frame 210 comprises a first base 212 disposed at the one side of the battery cell 100 in the first direction,
the first base 212 comprising: a first pressure surface S1 configured to be in contact with the one side surface of the battery case 110 in the first direction; and a first anti-pressure groove H1 provided at one side or other side of the first pressure surface S1 in a second direction, the first anti-pressure groove H1 recessed in one direction of the first direction and facing, in the first direction, one side end E1 or other side end E2 in the second direction of the one side surface of the battery case 110 in the first direction, and
the first frame 210 configured for pressing toward other direction of the first direction and fixing the battery cell 100 through the first pressure surface S1 while not pressing toward the other direction of the first direction and not fixing the one side end E1 or the other side end E2 in the second direction of the one side surface of the battery case 110 in the first direction by not being in contact with the one side end E1 or the other side end E2 in the second direction of the one side surface of the battery case 110 in the first direction by the first anti-pressure groove H1.

2. The battery cell fixing apparatus of claim 1, further comprising: a second frame 220 disposed to face the first frame 210 and configured for receiving the battery cell 100 therebetween, and configured to be in contact with other side surface of the battery case 110 in the first direction located at other side of the first direction of the one side surface of the battery case 110 in the first direction to press toward the one direction of the first direction and fix the battery cell 100 while not pressing toward the one direction of the first direction and not fixing one side end E3 or other side end E4 in the second direction of the other side surface of the battery case 110 by not being in contact with the one side end E3 or the other side end E4 in the second direction of the other side surface of the battery case 110 in the first direction.

3. The battery cell fixing apparatus of claim 2, wherein an other end in the second direction of the one side end E1 in the second direction not in contact with the first frame 210 of the one side surface of the battery case 110 in the first direction and other end in the second direction of the one side end E3 in the second direction of the other side surface of the battery case 110 in the first direction not in contact with the second frame 220 meet an imaginary straight line L1 extending in the first direction, or
one end in the second direction of the other side end E2 in the second direction of the one side surface of the battery case 110 in the first direction not in contact with the first frame 210 and one end in the second direction of the other side end E4 in the second direction of the other side surface of the battery case 110 in the first direction not in contact with the second frame 220 meet an imaginary straight line L2 extending in the first direction.

4. The battery cell fixing apparatus of any one of claims 2 and 3, wherein the second frame 220 comprises a second base 222 configured to be disposed at other side of the battery cell 100 in the first direction,
the second base 222 includes a second pressure surface S2 configured to be in contact with the other side surface of the battery case 110 in the first direction; and a second anti-pressure groove H2 provided at one side or other side of the second pressure surface S2 in the second direction, the second anti-pressure groove H2 recessed in the other direction of the first direction and facing, in the first direction, one side end E3 or other side end E4 in the second direction of the other side surface of the battery case 110 in the first direction, and
the second frame 220 configured for pressing toward the one direction of the first direction and fixing the battery cell 100 through the second pressure surface S2 while not pressing toward the one direction of the first direction and not fixing the one side end E3 or the other side end E4 in the second direction of the other side surface of the battery case 110 in the first direction by not being in contact with the one side end E3 or the other side end E4 in the second direction of the other side surface of the battery case 110 in the first direction by the second anti-pressure groove H2.

5. The battery cell fixing apparatus of claim 4, wherein the first base 212 comprises a pair of the first anti-pressure grooves H1 provided at the one side and the other side of the first pressure surface S1 in the second direction, respectively, the pair of the first anti-pressure grooves H1 recessed in the one direction of the first direction and facing, in the first direction, the one side end E1 and the other side end E2 in the second direction of the one side surface of the battery case 110 in the first direction, respectively,
the second base 222 comprises a pair of the second anti-pressure grooves H2 provided at the one side and the other side of the second pressure surface S2 in the second direction, respectively, the pair of the second anti-pressure grooves H2 recessed in the other direction of the first direction and facing, in the first direction, the one side end E3 and the other side end E4 in the second direction of the other side surface of the battery case 110 in the first direction, respectively.

6. The battery cell fixing apparatus of any one of claim 1 to claim 5, the battery cell fixing apparatus configured to receive a battery cell wherein the one side surface of the battery case 110 in the first direction extends in a third direction intersecting with the first and the second directions, and
the first pressure surface S1 and the first anti-pressure groove H1 are configured to extend in the third direction along the one side surface of the battery case 110 in the first direction.

7. The battery cell fixing apparatus of any one of claim 1 to claim 6, wherein the first base 212 comprises a third anti-pressure groove H3 provided at one side or other side of the first pressure surface S1 in a third direction intersecting with the first and the second directions, recessed in the one direction of the first direction and facing, in the first direction, one side end or other side end in the third direction of the one side surface of the battery case 110 in the first direction.

8. The battery cell fixing apparatus of any one of claim 1 to claim 7, wherein the first base 212 comprises a pair of the first anti-pressure grooves H1 provided at the one side and the other side of the first pressure surface S1 in the second direction, respectively, the pair of the first anti-pressure grooves H1 recessed in the one direction of the first direction and facing, in the first direction, the one side end E1 and the other side end E2 in the second direction of the one side surface of the battery case 110 in the first direction, respectively.

9. The battery cell fixing apparatus of claim 8, wherein the first frame 210 comprises: a first one side support 214a disposed at one side of the first anti-pressure groove H1 in the second direction provided at one side of the first pressure surface S1 in the second direction of the pair of the first anti-pressure grooves H1, wherein the first one side support 214a is coupled to the first base 212 and is configured to face, in the second direction, or is configured to be in contact with one side surface of the battery cell 100 in the second direction; and a first other side support 214b disposed at other side of the first anti-pressure groove H1 in the second direction provided at other side of the first pressure surface S1 in the second direction of the pair of the first anti-pressure grooves H1, wherein the first other side support 214b is coupled to the first base 212 and is configured to face, in the second direction, or is configured to be in contact with other side surface of the battery cell 100 in the second direction.

10. The battery cell fixing apparatus of any one of claim 1 to claim 9, wherein the first frame 210 comprises a first support 214 coupled to the first base 212 and is configured to face, in the second direction, or configured to be in contact with one side surface or other side surface of the battery cell 100 in the second direction, wherein first support 214 is disposed at one side of the first anti-pressure groove H1 in the second direction provided at one side of the first pressure surface S1 in the second direction or at the other side of the first anti-pressure groove H1 in the second direction provided at other side of the first pressure surface S1 in the second direction.

11. The battery cell fixing apparatus of claim 10 , wherein the battery cell fixing apparatus is configured to fix a battery case 110 comprising: a first case part 110a extending in the second direction and a third direction intersecting with the first and the second directions; and a second case part 110b disposed at one side of the first case part 110a in the first direction and covering the first case part 110a,
the electrode assembly 120 is accommodated between the first case part 110a and the second case part 110b,
the first case part 110a comprises a first receptor 112a and a first extension 114a,
the second case part 110b comprises a second receptor 112b and a second extension 114b,
the first receptor 112a and the second receptor 112b face or are in contact with each other to provide an accommodating space AS where the electrode assembly 120 is accommodated,
the first extension 114a and the second extension 114b extend outward from the first receptor 112a and the second receptor 112b, respectively, in at least one direction or other direction of the second direction, the first extension 114a and the second extension 114b at least partially surrounding the first receptor 112a and the second receptor 112b, respectively, and bondable to each other,
the second receptor 112b protrudes further in the one direction of the first direction than the second extension 114b,
the first pressure surface S1 is in contact with one side surface of the second receptor 112b in the first direction,
the first anti-pressure groove H1 is configured to face, in the first direction, the one side end E1 or the other side end E2 in the second direction of the one side surface of the second receptor 112b in the first direction,
the first frame 210 is configured to press toward the other direction of the first direction and fixes the second receptor 112b of the battery cell 100 through the first pressure surface S1 while not pressing toward the other direction of the first direction and not fixing the one side end E1 or the other side end E2 in the second direction of the one side surface of the second receptor 112b in the first direction by not being in contact with the one side end E1 or the other side end E2 in the second direction of the one side surface of the second receptor 112b in the first direction by the first anti-pressure groove H1,
the first support 214 is configured to face, in the second direction, or is configured to be in contact with the one side surface or the other side surface of the second receptor 112b in the second direction and is in contact with the one side surface of the second extension 114b in the first direction, and
the first frame 210 is configured to press toward the other direction of the first direction and fixes the second extension 114b of the battery cell 100 through the first support 214.

12. The battery cell fixing apparatus of any one of claim 1 to claim 11, wherein the battery cell fixing apparatus is configured to fix a battery case 110 comprising: a first case part 110a extending in the second direction and a third direction intersecting with the first and the second directions; and a second case part 110b disposed at one side of the first case part 110a in the first direction and covering the first case part 110a,
the electrode assembly 120 is accommodated between the first case part 110a and the second case part 110b,
the first case part 110a and the second case part 110b comprise a first receptor 112a and a second receptor 112b, respectively, the first receptor 112a and the second receptor 112b providing an accommodating space AS where the electrode assembly 120 is accommodated by facing or being in contact with each other,
a width W1 of the accommodating space AS in the second direction is larger than a width W2 of the electrode assembly 120 in the second direction such that at least a portion of the one side end E1 or the other side end E2 in the second direction of the one side surface of the second receptor 112b in the first direction is not supported by the electrode assembly 120 in the first direction, and
wherein the first frame 210 is configured to contact with one side surface in a first direction of the second receptor 112b to press toward other direction of the first direction and fix the battery cell 100 while not pressing toward the other direction of the first direction and not fixing the one side end E1 or the other side end E2 in the second direction by not being in contact with the one side end E1 or the other side end E2 in the second direction of the one side surface in the first direction of the battery case.

13. The battery cell fixing apparatus of any one of claim 1 to claim 12, wherein the second case part 110b is folded relative to the first case part 110a to face, in the first direction, and cover the first case part 110a, wherein one end or other end of the second case part 110b is connected to one end or other end of the first case part 110a in the second direction, and other portion of the second case part 110b except the one end or the other end of the second case part 110b is detachable from the first case part 110a,
the second receptor 112b has a concave shape defining a predetermined space PS2 constituting at least a portion of the accommodating space AS for accommodating at least a portion of the electrode assembly 120, and
a width W1' of the predetermined space PS2 in the second direction among the accommodating spaces AS is larger than a width W2 of the electrode assembly 120 in the second direction to prevent interference between the second receptor 112b and the electrode assembly 120 when the second case part 110b is folded relative to the first case part 110a with the electrode assembly 120 disposed in the first receptor 112a such that at least a portion of the one side end E1 or the other side end E2 in the second direction of the one side surface of the second receptor 112b in the first direction is not supported by the electrode assembly 120 in the first direction.

14. The battery cell fixing apparatus of any one of claim 1 to claim 13, wherein, when in use to fix a battery cell, a length in the second direction of the one side end E1 or the other side end E2 in the second direction of the one side surface of the battery case 110 in the first direction that is not in contact with the first frame 210 is equal to or greater than 1/40 and equal to or less than 1/5 of the length in the second direction of the one side surface of the battery case 110 in the first direction.

## Patentansprüche

1. Batteriezellenbefestigungsvorrichtung zum Befestigen einer Batteriezelle 100, die ein Batteriegehäuse 110 und eine Elektrodenanordnung 120 aufweist, welche in dem Batteriegehäuse 110 aufgenommen ist, wobei die Batteriezellenbefestigungsvorrichtung aufweist:
einen ersten Rahmen 210, der konfiguriert ist, um mit einer Seitenfläche in einer ersten Richtung des Batteriegehäuses 110 in Kontakt zu sein,
wobei der erste Rahmen 210 eine erste Basis 212 aufweist, die an der einen Seite der Batteriezelle 100 in der ersten Richtung angeordnet ist,
wobei die erste Basis 212 aufweist: eine erste Druckfläche S1, die konfiguriert ist, um mit der einen Seitenfläche des Batteriegehäuses 110 in der ersten Richtung in Kontakt zu sein; und eine erste Gegendrucknut H1, die an einer Seite oder einer anderen Seite der ersten Druckfläche S1 in einer zweiten Richtung gebildet ist, wobei die erste Gegendrucknut H1 in einer Richtung der ersten Richtung vertieft ist und in der ersten Richtung einem Seitenende E1 oder einem anderen Seitenende E2 in der zweiten Richtung der einen Seitenfläche des Batteriegehäuses 110 in der ersten Richtung zugewandt ist, und
wobei der erste Rahmen 210 konfiguriert ist, um in eine andere Richtung der ersten Richtung zu drücken und die Batteriezelle 100 durch die erste Druckfläche S1 zu befestigen, während er nicht in die andere Richtung der ersten Richtung drückt und das eine Seitenende E1 oder das andere Seitenende E2 in der zweiten Richtung der einen Seitenfläche des Batteriegehäuses 110 in der ersten Richtung nicht befestigt, indem er nicht mit dem einen Seitenende E1 oder dem anderen Seitenende E2 in der zweiten Richtung der einen Seitenfläche des Batteriegehäuses 110 in der ersten Richtung durch die erste Gegendrucknut H1 in Kontakt steht.

2. Batteriezellenbefestigungsvorrichtung nach Anspruch 1, die ferner aufweist: einen zweiten Rahmen 220, der angeordnet ist, um dem ersten Rahmen 210 zugewandt zu sein, und konfiguriert ist, um die Batteriezelle 100 dazwischen aufzunehmen, und konfiguriert ist, um mit einer anderen Seitenfläche des Batteriegehäuses 110 in der ersten Richtung in Kontakt zu sein, die sich auf der anderen Seite der ersten Richtung der einen Seitenfläche des Batteriegehäuses 110 in der ersten Richtung befindet, um in die eine Richtung der ersten Richtung zu drücken und die Batteriezelle 100 zu befestigen, während er nicht in die eine Richtung der ersten Richtung drückt und ein Seitenende E3 oder ein anderes Seitenende E4 in der zweiten Richtung der anderen Seitenfläche des Batteriegehäuses 110 nicht befestigt, indem er nicht mit dem einen Seitenende E3 oder dem anderen Seitenende E4 in der zweiten Richtung der anderen Seitenfläche des Batteriegehäuses 110 in der ersten Richtung in Kontakt steht.

3. Batteriezellenbefestigungsvorrichtung nach Anspruch 2, wobei ein anderes Ende in der zweiten Richtung des einen Seitenendes E1 in der zweiten Richtung, das nicht mit dem ersten Rahmen 210 der einen Seitenfläche des Batteriegehäuses 110 in der ersten Richtung in Kontakt steht, und ein anderes Ende in der zweiten Richtung des einen Seitenendes E3 in der zweiten Richtung der anderen Seitenfläche des Batteriegehäuses 110 in der ersten Richtung, das nicht mit dem zweiten Rahmen 220 in Kontakt steht, eine imaginäre gerade Linie L1 treffen, die sich in der ersten Richtung erstreckt, oder
ein Ende in der zweiten Richtung des anderen Seitenendes E2 in der zweiten Richtung der einen Seitenfläche des Batteriegehäuses 110 in der ersten Richtung, das nicht mit dem ersten Rahmen 210 in Kontakt steht, und ein Ende in der zweiten Richtung des anderen Seitenendes E4 in der zweiten Richtung der anderen Seitenfläche des Batteriegehäuses 110 in der ersten Richtung, das nicht mit dem zweiten Rahmen 220 in Kontakt steht, eine imaginäre gerade Linie L2 treffen, die sich in der ersten Richtung erstreckt.

4. Batteriezellenbefestigungsvorrichtung nach einem der Ansprüche 2 und 3, wobei der zweite Rahmen 220 eine zweite Basis 222 aufweist, die konfiguriert ist, um an einer anderen Seite der Batteriezelle 100 in der ersten Richtung angeordnet zu sein,
die zweite Basis 222 eine zweite Druckfläche S2, die konfiguriert ist, um mit der anderen Seitenfläche des Batteriegehäuses 110 in der ersten Richtung in Kontakt zu sein; und eine zweite Gegendrucknut H2 aufweist, die an einer Seite oder einer anderen Seite der zweiten Druckfläche S2 in der zweiten Richtung gebildet ist, wobei die zweite Gegendrucknut H2 in der anderen Richtung der ersten Richtung vertieft ist und in der ersten Richtung einem Seitenende E3 oder einem anderen Seitenende E4 in der zweiten Richtung der anderen Seitenfläche des Batteriegehäuses 110 in der ersten Richtung zugewandt ist, und
wobei der zweite Rahmen 220 konfiguriert ist, um in die eine Richtung der ersten Richtung zu drücken und die Batteriezelle 100 durch die zweite Druckfläche S2 zu befestigen, während er nicht in die eine Richtung der ersten Richtung drückt und das eine Seitenende E3 oder das andere Seitenende E4 in der zweiten Richtung der anderen Seitenfläche des Batteriegehäuses 110 in der ersten Richtung nicht befestigt, indem er nicht mit dem einen Seitenende E3 oder dem anderen Seitenende E4 in der zweiten Richtung der anderen Seitenfläche des Batteriegehäuses 110 in der ersten Richtung durch die zweite Gegendrucknut H2 in Kontakt steht.

5. Batteriezellenbefestigungsvorrichtung nach Anspruch 4, wobei die erste Basis 212 ein Paar der ersten Gegendrucknuten H1 aufweist, die an der einen Seite bzw. der anderen Seite der ersten Druckfläche S1 in der zweiten Richtung gebildet sind, wobei das Paar der ersten Gegendrucknuten H1 in der einen Richtung der ersten Richtung vertieft ist und in der ersten Richtung dem einen Seitenende E1 bzw. dem anderen Seitenende E2 in der zweiten Richtung der einen Seitenfläche des Batteriegehäuses 110 in der ersten Richtung zugewandt ist,
die zweite Basis 222 ein Paar der zweiten Gegendrucknuten H2 aufweist, die an der einen Seite bzw. der anderen Seite der zweiten Druckfläche S2 in der zweiten Richtung gebildet sind, wobei das Paar der zweiten Gegendrucknuten H2 in der anderen Richtung der ersten Richtung vertieft ist und in der ersten Richtung dem einen Seitenende E3 bzw. dem anderen Seitenende E4 in der zweiten Richtung der anderen Seitenfläche des Batteriegehäuses 110 in der ersten Richtung zugewandt ist.

6. Batteriezellenbefestigungsvorrichtung nach einem der Ansprüche 1 bis 5, wobei die Batteriezellenbefestigungsvorrichtung konfiguriert ist, um eine Batteriezelle aufzunehmen, wobei sich die eine Seitenfläche des Batteriegehäuses 110 in der ersten Richtung in einer dritten Richtung erstreckt, die sich mit der ersten Richtung und der zweiten Richtung überkreuzt, und
die erste Druckfläche S1 und die erste Gegendrucknut H1 konfiguriert sind, um sich in der dritten Richtung entlang der einen Seitenfläche des Batteriegehäuses 110 in der ersten Richtung zu erstrecken.

7. Batteriezellenbefestigungsvorrichtung nach einem der Ansprüche 1 bis 6, wobei die erste Basis 212 eine dritte Gegendrucknut H3 aufweist, die an einer Seite oder einer anderen Seite der ersten Druckfläche S1 in einer dritten Richtung gebildet ist, die sich mit der ersten Richtung und der zweiten Richtung überkreuzt, in der einen Richtung der ersten Richtung vertieft ist und in der ersten Richtung einem Seitenende oder einem anderen Seitenende in der dritten Richtung der einen Seitenfläche des Batteriegehäuses 110 in der ersten Richtung zugewandt ist.

8. Batteriezellenbefestigungsvorrichtung nach einem der Ansprüche 1 bis 7, wobei die erste Basis 212 ein Paar der ersten Gegendrucknuten H1 aufweist, die an der einen Seite bzw. der anderen Seite der ersten Druckfläche S1 in der zweiten Richtung gebildet sind, wobei das Paar der ersten Gegendrucknuten H1 in der einen Richtung der ersten Richtung vertieft ist und in der ersten Richtung dem einen Seitenende E1 bzw. dem anderen Seitenende E2 in der zweiten Richtung der einen Seitenfläche des Batteriegehäuses 110 in der ersten Richtung zugewandt ist.

9. Batteriezellenbefestigungsvorrichtung nach Anspruch 8, wobei der erste Rahmen 210 aufweist: eine erste eine Seitenstütze 214a, die an einer Seite der ersten Gegendrucknut H1 in der zweiten Richtung angeordnet ist und an einer Seite der ersten Druckfläche S1 in der zweiten Richtung des Paars der ersten Gegendrucknuten H1 gebildet ist, wobei die erste eine Seitenstütze 214a mit der ersten Basis 212 gekoppelt ist und konfiguriert ist, um in der zweiten Richtung zugewandt zu sein, oder konfiguriert ist, um mit einer Seitenfläche der Batteriezelle 100 in der zweiten Richtung in Kontakt zu sein; und eine erste andere Seitenstütze 214b, die an einer anderen Seite der ersten Gegendrucknut H1 in der zweiten Richtung angeordnet ist und an einer anderen Seite der ersten Druckfläche S1 in der zweiten Richtung des Paars der ersten Gegendrucknuten H1 gebildet ist, wobei die erste andere Seitenstütze 214b mit der ersten Basis 212 gekoppelt ist und konfiguriert ist, um in der zweiten Richtung zugewandt zu sein, oder konfiguriert ist, um mit einer anderen Seitenfläche der Batteriezelle 100 in der zweiten Richtung in Kontakt zu sein.

10. Batteriezellenbefestigungsvorrichtung nach einem der Ansprüche 1 bis 9, wobei der erste Rahmen 210 eine erste Stütze 214 aufweist, die mit der ersten Basis 212 gekoppelt ist und konfiguriert ist, um in der zweiten Richtung zugewandt zu sein, oder konfiguriert ist, um mit einer Seitenfläche oder einer anderen Seitenfläche der Batteriezelle 100 in der zweiten Richtung in Kontakt zu sein, wobei die erste Stütze 214 an einer Seite der ersten Gegendrucknut H1 in der zweiten Richtung angeordnet ist, die an einer Seite der ersten Druckfläche S1 in der zweiten Richtung gebildet ist, oder an der anderen Seite der ersten Gegendrucknut H1 in der zweiten Richtung angeordnet ist, die an einer anderen Seite der ersten Druckfläche S1 in der zweiten Richtung gebildet ist.

11. Batteriezellenbefestigungsvorrichtung nach Anspruch 10, wobei die Batteriezellenbefestigungsvorrichtung konfiguriert ist, um ein Batteriegehäuse 110 zu befestigen, das aufweist: ein erstes Gehäuseteil 110a, das sich in der zweiten Richtung und einer dritten Richtung erstreckt, die sich mit der ersten Richtung und der zweiten Richtung überkreuzt; und ein zweites Gehäuseteil 110b, das an einer Seite des ersten Gehäuseteils 110a in der ersten Richtung angeordnet ist und das erste Gehäuseteil 110a bedeckt,
die Elektrodenanordnung 120 zwischen dem ersten Gehäuseteil 110a und dem zweiten Gehäuseteil 110b aufgenommen ist,
das erste Gehäuseteil 110a einen ersten Rezeptor 112a und eine erste Erweiterung 114a aufweist,
das zweite Gehäuseteil 110b einen zweiten Rezeptor 112b und eine zweite Erweiterung 114b aufweist,
der erste Rezeptor 112a und der zweite Rezeptor 112b einander zugewandt sind oder miteinander in Kontakt sind, um einen Aufnahmeraum AS zu bilden, in dem die Elektrodenanordnung 120 aufgenommen ist,
die erste Erweiterung 114a und die zweite Erweiterung 114b sich von dem ersten Rezeptor 112a bzw. dem zweiten Rezeptor 112b in mindestens einer Richtung oder einer anderen Richtung der zweiten Richtung nach außen erstrecken, wobei die erste Erweiterung 114a und die zweite Erweiterung 114b den ersten Rezeptor 112a bzw. den zweiten Rezeptor 112b zumindest teilweise umgeben und miteinander verbindbar sind,
der zweite Rezeptor 112b weiter in die eine Richtung der ersten Richtung vorsteht als die zweite Erweiterung 114b,
die erste Druckfläche S1 mit einer Seitenfläche des zweiten Rezeptors 112b in der ersten Richtung in Kontakt ist,
die erste Gegendrucknut H1 konfiguriert ist, um in der ersten Richtung dem einen Seitenende E1 oder dem anderen Seitenende E2 in der zweiten Richtung der einen Seitenfläche des zweiten Rezeptors 112b in der ersten Richtung zugewandt zu sein,
der erste Rahmen 210 konfiguriert ist, um in die andere Richtung der ersten Richtung zu drücken und den zweiten Rezeptor 112b der Batteriezelle 100 durch die erste Druckfläche S1 zu befestigen, während er nicht in die andere Richtung der ersten Richtung drückt und das eine Seitenende E1 oder das andere Seitenende E2 in der zweiten Richtung der einen Seitenfläche des zweiten Rezeptors 112b in der ersten Richtung nicht befestigt, indem er nicht mit dem einen Seitenende E1 oder dem anderen Seitenende E2 in der zweiten Richtung der einen Seitenfläche des zweiten Rezeptors 112b in der ersten Richtung durch die erste Gegendrucknut H1 in Kontakt steht,
die erste Stütze 214 konfiguriert ist, um in der zweiten Richtung zugewandt zu sein, oder konfiguriert ist, um mit der einen Seitenfläche oder der anderen Seitenfläche des zweiten Rezeptors 112b in der zweiten Richtung in Kontakt zu sein, und mit der einen Seitenfläche der zweiten Erweiterung 114b in der ersten Richtung in Kontakt ist, und
der erste Rahmen 210 konfiguriert ist, um in die andere Richtung der ersten Richtung zu drücken und die zweite Erweiterung 114b der Batteriezelle 100 durch die erste Stütze 214 zu befestigen.

12. Batteriezellenbefestigungsvorrichtung nach einem der Ansprüche 1 bis 11, wobei die Batteriezellenbefestigungsvorrichtung konfiguriert ist, um ein Batteriegehäuse 110 zu befestigen, das aufweist: ein erstes Gehäuseteil 110a, das sich in der zweiten Richtung und einer dritten Richtung erstreckt, die sich mit der ersten Richtung und der zweiten Richtung überkreuzt; und ein zweites Gehäuseteil 110b, das an einer Seite des ersten Gehäuseteils 110a in der ersten Richtung angeordnet ist und das erste Gehäuseteil 110a bedeckt,
die Elektrodenanordnung 120 zwischen dem ersten Gehäuseteil 110a und dem zweiten Gehäuseteil 110b aufgenommen ist,
das erste Gehäuseteil 110a und das zweite Gehäuseteil 110b einen ersten Rezeptor 112a bzw. einen zweiten Rezeptor 112b aufweisen, wobei der erste Rezeptor 112a und der zweite Rezeptor 112b einen Aufnahmeraum AS bilden, in dem die Elektrodenanordnung 120 aufgenommen ist, indem sie einander zugewandt sind oder miteinander in Kontakt sind,
eine Breite W1 des Aufnahmeraums AS in der zweiten Richtung größer ist als eine Breite W2 der Elektrodenanordnung 120 in der zweiten Richtung, so dass mindestens ein Abschnitt des einen Seitenendes E1 oder des anderen Seitenendes E2 in der zweiten Richtung der einen Seitenfläche des zweiten Rezeptors 112b in der ersten Richtung nicht von der Elektrodenanordnung 120 in der ersten Richtung gestützt wird, und
wobei der erste Rahmen 210 konfiguriert ist, um mit einer Seitenfläche in einer ersten Richtung des zweiten Rezeptors 112b in Kontakt zu sein, um in eine andere Richtung der ersten Richtung zu drücken und die Batteriezelle 100 zu befestigen, während er nicht in die andere Richtung der ersten Richtung drückt und das eine Seitenende E1 oder das andere Seitenende E2 in der zweiten Richtung nicht befestigt, indem er nicht mit dem einen Seitenende E1 oder dem anderen Seitenende E2 in der zweiten Richtung der einen Seitenfläche in der ersten Richtung des Batteriegehäuses in Kontakt steht.

13. Batteriezellenbefestigungsvorrichtung nach einem der Ansprüche 1 bis 12, wobei das zweite Gehäuseteil 110b relativ zu dem ersten Gehäuseteil 110a gefaltet ist, um in der ersten Richtung dem ersten Gehäuseteil 110a zugewandt zu sein und dieses abzudecken, wobei ein Ende oder ein anderes Ende des zweiten Gehäuseteils 110b mit einem Ende oder einem anderen Ende des ersten Gehäuseteils 110a in der zweiten Richtung verbunden ist und ein anderer Abschnitt des zweiten Gehäuseteils 110b mit Ausnahme des einen Endes oder des anderen Endes des zweiten Gehäuseteils 110b von dem ersten Gehäuseteil 110a abnehmbar ist,
der zweite Rezeptor 112b eine konkave Form aufweist, die einen vorbestimmten Raum PS2 definiert, der mindestens einen Abschnitt des Aufnahmeraums AS zum Aufnehmen mindestens eines Abschnitts der Elektrodenanordnung 120 bildet, und
eine Breite W1' des vorbestimmten Raums PS2 in der zweiten Richtung unter den Aufnahmeräumen AS größer ist als eine Breite W2 der Elektrodenanordnung 120 in der zweiten Richtung, um eine Interferenz zwischen dem zweiten Rezeptor 112b und der Elektrodenanordnung 120 zu verhindern, wenn das zweite Gehäuseteil 110b relativ zu dem ersten Gehäuseteil 110a gefaltet ist, wobei die Elektrodenanordnung 120 in dem ersten Rezeptor 112a angeordnet ist, so dass mindestens ein Abschnitt des einen Seitenendes E1 oder des anderen Seitenendes E2 in der zweiten Richtung der einen Seitenfläche des zweiten Rezeptors 112b in der ersten Richtung nicht von der Elektrodenanordnung 120 in der ersten Richtung gestützt wird.

14. Batteriezellenbefestigungsvorrichtung nach einem der Ansprüche 1 bis 13, wobei, wenn sie zum Befestigen einer Batteriezelle verwendet wird, eine Länge in der zweiten Richtung des einen Seitenendes E1 oder des anderen Seitenendes E2 in der zweiten Richtung der einen Seitenfläche des Batteriegehäuses 110 in der ersten Richtung, die nicht mit dem ersten Rahmen 210 in Kontakt steht, gleich oder größer als 1/40 und gleich oder kleiner als 1/5 der Länge in der zweiten Richtung der einen Seitenfläche des Batteriegehäuses 110 in der ersten Richtung ist.

## Revendications

1. Appareil de fixation de cellule de batterie pour la fixation d'une cellule de batterie 100 comprenant un boîtier de batterie 110 et un ensemble d'électrodes 120 contenu dans le boîtier de batterie 110, l'appareil de fixation de cellules de batterie comprenant :
un premier cadre 210 configuré pour se trouver au contact d'une surface latérale dans une première direction du boîtier de batterie 110,
le premier cadre 210 comprenant une première base 212 disposée d'un côté de la cellule de batterie 100 dans la première direction,
la première base 212 comprenant : une première surface de pression S1 configurée pour être au contact de l'une surface latérale du boîtier de batterie 110 dans la première direction ; et une première rainure anti-pression H1 agencée sur un côté ou l'autre côté de la première surface de pression S1 dans une deuxième direction, la première rainure anti-pression H1 évidée dans une direction de la première direction et faisant face, dans la première direction, à une extrémité latérale E1 ou l'autre extrémité latérale E2 dans la deuxième direction de l'une surface latérale du boîtier de batterie 110 dans la première direction, et
le premier cadre 210 configuré pour faire pression vers l'autre direction de la première direction et fixer la cellule de batterie 100 à travers la première surface de pression S1 tout en ne faisant pas pression dans l'autre direction de la première direction, et en ne fixant pas l'une extrémité latérale E1 ou l'autre extrémité latérale E2 dans la deuxième direction de l'une surface latérale du boîtier de batterie 110 dans la première direction en n'étant pas au contact de l'une extrémité latérale E1 ou l'autre extrémité latérale E2 dans la deuxième direction de l'une surface latérale du boîtier de batterie 110 dans la première direction par la première rainure anti-pression H1.

2. Appareil de fixation de cellule de batterie selon la revendication 1, comprenant en outre : un deuxième cadre 220 disposé de façon à faire face au premier cadre 210, et configuré pour recevoir la cellule de batterie 100 entre eux, et configuré pour se trouver au contact de l'autre surface latérale du boîtier de batterie 110 dans la première direction située de l'autre côté de la première direction de l'une surface latérale du boîtier de batterie 110 dans la première direction pour faire pression vers l'une direction de la première direction et fixer la cellule de batterie 100 tout en n'appuyant pas vers l'une direction de la première direction et en ne fixant pas une extrémité latérale E3 ou l'autre extrémité latérale E4 dans la deuxième direction de l'autre surface latérale du boîtier de batterie 110 en ne se trouvant pas au contact avec l'une extrémité latérale E3 ou l'autre extrémité latérale E4 dans la deuxième direction de l'autre surface latérale du boîtier de batterie 110 dans la première direction.

3. Appareil de fixation de cellule de batterie selon la revendication 2, une autre extrémité dans la deuxième direction de l'une extrémité latérale E1 dans la deuxième direction non en contact avec le premier cadre 210 de l'une surface latérale du boîtier de batterie 110 dans la première direction et l'autre extrémité dans la deuxième direction de l'une extrémité latérale E3 dans la deuxième direction de l'autre surface latérale du boîtier de batterie 110 dans la première direction non en contact avec le deuxième cadre 220 rencontrent une ligne droite imaginaire L1 s'étendant dans la première direction, ou
un bout de la deuxième direction de l'autre extrémité latérale E2 dans la deuxième direction de l'une surface latérale du boîtier de batterie 110 dans la première direction non en contact avec le premier cadre 210 et un bout dans la deuxième direction de l'autre extrémité latérale E4 dans la deuxième direction de l'autre surface latérale du boîtier de batterie 110 dans la première direction non en contact avec le deuxième cadre 220 rencontrent une ligne droite imaginaire L2 s'étendant dans la première direction.

4. Appareil de fixation de cellule de batterie selon une quelconque des revendications 2 et 3, le deuxième cadre 220 comprenant une deuxième base 222 configurée pour être disposée sur l'autre côté de la cellule de batterie 100 dans la première direction,
la deuxième base 222 comprenant une deuxième surface de pression S2 configurée pour être au contact de l'autre surface latérale du boîtier de batterie 110 dans la première direction ; et une deuxième rainure anti-pression H2 agencée sur un côté ou l'autre côté de la deuxième surface de pression S2 dans la deuxième direction, la deuxième rainure anti-pression H2 évidée dans l'autre direction de la première direction et faisant face, dans la première direction, à une extrémité latérale E3 ou l'autre extrémité latérale E4 dans la deuxième direction de l'une surface latérale du boîtier de batterie 110 dans la première direction, et
le deuxième cadre 220 configuré pour faire pression vers l'une direction de la première direction et fixer la cellule de batterie 100 à travers la deuxième surface de pression S2 tout en ne faisant pas pression dans l'une direction de la première direction, et en ne fixant pas l'une extrémité latérale E3 ou l'autre extrémité latérale E4 dans la deuxième direction de l'autre surface latérale du boîtier de batterie 110 dans la première direction en n'étant pas au contact de l'une extrémité latérale E3 ou l'autre extrémité latérale E4 dans la deuxième direction de l'autre surface latérale du boîtier de batterie 110 dans la première direction par la deuxième rainure anti-pression H2.

5. Appareil de fixation de cellule de batterie selon la revendication 4, la première base 212 comprenant une paire des premières rainures anti-pression H1 agencées sur l'un côté et l'autre côté de la première surface de pression S1 dans la deuxième direction, respectivement, la paire des premières rainures anti-pression H1 évidées dans l'une direction de la première direction et faisant face, dans la première direction, à une extrémité latérale E1 et l'autre extrémité latérale E2 dans la deuxième direction de l'une surface latérale du boîtier de batterie 110 dans la première direction, respectivement,
la deuxième base 222 comprenant une paire des deuxièmes rainures anti-pression H2 agencées sur l'un côté et l'autre côté de la deuxième surface de pression S2 dans la deuxième direction, respectivement, la paire des deuxièmes rainures anti-pression H2 évidées dans l'autre direction de la première direction et faisant face, dans la première direction, à une extrémité latérale E3 et l'autre extrémité latérale E4 dans la deuxième direction de l'autre surface latérale du boîtier de batterie 110 dans la première direction, respectivement.

6. Appareil de fixation de cellule de batterie selon une quelconque des revendications 1 à 5, l'appareil de fixation de cellules de batterie étant configuré pour recevoir une cellule de batterie, l'une surface latérale du boîtier de batterie 110 dans la première direction s'étendant dans une troisième direction s ;entrecoupant avec la première et la deuxième directions, et
la première surface de pression S1 et la première rainure anti-pression H1 étant configurées pour s'étendre dans la troisième direction le long de l'une surface latérale du boîtier de batterie 110 dans la première direction.

7. Appareil de fixation de cellule de batterie selon une quelconque des revendications 1 à 6, la première base 212 comprenant une troisième rainure anti-pression H3 agencée sur l'un côté ou l'autre côté de la première surface de pression S1 dans une troisième direction s'entrecoupant avec les première et deuxième directions, évidées dans l'une direction de la première direction, et faisant face, dans la première direction, à une extrémité latérale ou l'autre extrémité latérale dans la troisième direction de l'une surface latérale du boîtier de batterie 110 dans la première direction.

8. Appareil de fixation de cellule de batterie selon une quelconque des revendications 1 à 7, la première base 212 comprenant une paire des premières rainures anti-pression H1 agencées sur l'un côté et l'autre côté de la première surface de pression S1 dans la deuxième direction, respectivement, la paire des premières rainures anti-pression H1 évidées dans l'une direction de la première direction et faisant face, dans la première direction, à l'une extrémité latérale E1 et l'autre extrémité latérale E2 dans la deuxième direction de l'une surface latérale du boîtier de la batterie 110 dans la première direction, respectivement.

9. Appareil de fixation de cellule de batterie selon la revendication 8, le premier cadre 210 comprenant : un premier support d'un côté 214a disposé d'un côté de la première rainure anti-pression H1 dans la deuxième direction agencée sur un côté de la première surface de pression S1 dans la deuxième direction de la paire des premières rainures anti-pression H1, où le premier support d'un côté 214a est couplé à la première base 212, et configuré pour faire face, dans la deuxième direction, à une surface latérale de la cellule de batterie 100 dans la deuxième direction, ou étant configuré pour être au contact avec celle-ci ; et un premier support de l'autre côté, 214b, disposé sur l'autre côté de la première rainure anti-pression H1 dans la deuxième direction, agencée sur l'autre côté de la première surface de pression S1 dans la deuxième direction de la paire des premières rainures anti-pression H1, le premier support de l'autre côté 214b étant couplé à la première base 212 et étant configuré pour faire face, dans la deuxième direction, à l'autre surface latérale de la cellule de batterie 100 dans la deuxième direction, ou étant configuré pour être au contact avec celle-ci.

10. Appareil de fixation de cellule de batterie selon une quelconque des revendications 1 à 9, le premier cadre 210 comprenant un premier support 214 couplé à la première base 212 et étant configuré pour faire face, dans la deuxième direction, à une surface latérale ou l'autre surface latérale de la cellule de batterie 100, ou configuré pour être au contact avec celle-ci dans la deuxième direction, le premier support 214 étant disposé sur un côté de la première rainure anti-pression H1 dans la deuxième direction agencée sur un côté de la première surface de pression S1 dans la deuxième direction ou sur l'autre côté de la première rainure anti-pression H1 dans la deuxième direction agencée sur l'autre côté de la première surface de pression S1 dans la deuxième direction.

11. Appareil de fixation de cellule de batterie selon la revendication 10, l'appareil de fixation de cellule de batterie étant configuré pour fixer un boîtier de batterie 110 comprenant : une premier partie de boîtier 110a s'étendant dans la deuxième direction et une troisième direction s'entrecopant avec les première et deuxième directions ; et une deuxième partie de boîtier 110b disposée sur un côté de la première partie de boîtier 110a dans la première direction et couvrant la première partie de boîtier 110a,
l'ensemble d'électrodes 120 étant placé entre la première partie de boîtier 110a et la deuxième partie de boîtier 110b,
la première partie de boîtier 110a comprenant un premier récepteur 112a et une première extension 114a,
la deuxième partie de boîtier 110b comprenant un deuxième récepteur 112b et une deuxième extension 114b,
le premier récepteur 112a et le deuxième récepteur 112b se faisant face ou étant en contact entre eux afin de créer un espace récepteur AS où est placé l'ensemble d'électrodes 120,
la première extension 114a et la deuxième extension 114b s'étendant vers l'extérieur depuis le premier récepteur 112a et le deuxième récepteur 112b respectivement, dans au moins une direction ou une autre direction de la deuxième direction, la première extension 114a et la deuxième extension 114b entourant au moins partiellement le premier récepteur 112a et le deuxième récepteur 112b, respectivement, et pouvant être liées l'une à l'autre,
le deuxième récepteur 112b faisant davantage saillie dans l'une direction de la première direction que de la deuxième extension 114b,
la première surface de pression S1 étant au contact d'une surface latérale du deuxième récepteur 112b dans la première direction,
la première rainure anti-pression H1 étant configurée pour faire face, dans la première direction, à une extrémité latérale E1 ou l'autre extrémité latérale E2 dans la deuxième direction de l'une surface latérale du deuxième récepteur 112b dans la première direction,
le premier cadre 210 étant configuré pour faire pression vers l'autre direction de la première direction et fixer le deuxième récepteur 112b de la cellule de batterie 100 à travers la première surface de pression S1 tout en ne faisant pas pression vers l'autre direction de la première direction, et en ne fixant pas l'une extrémité latérale E1 ou l'autre extrémité latérale E2 dans la deuxième direction de l'une surface latérale du deuxième récepteur 112b dans la première direction en n'étant pas au contact de l'une extrémité latérale E1 ou l'autre extrémité latérale E2 dans la deuxième direction de l'une surface latérale du deuxième récepteur 112b dans la première direction par la première rainure anti-pression H1.
le premier support 214 étant configuré pour faire face, dans la deuxième direction, ou étant configuré pour être au contact de l'une surface latérale ou de l'autre surface latérale du deuxième récepteur 112b dans la deuxième direction et étant au contact de l'une surface latérale de la deuxième extension 114b dans la première direction, et
le premier cadre 210 étant configuré pour faire pression dans l'autre direction de la première direction et fixant la deuxième extension 114b de la cellule de batterie 100 par le biais du premier support 214.

12. Appareil de fixation de cellule de batterie selon une quelconque des revendications 1 à 11, l'appareil de fixation de cellule de batterie étant configuré pour fixer un boîtier de batterie 110 comprenant : une premier partie de boîtier 110a s'étendant dans la deuxième direction et une troisième direction croisant les première et deuxième directions ; et une deuxième partie de boîtier 110b disposée sur un côté de la première partie de boîtier 110a dans la première direction et couvrant la première partie de boîtier 110a,
l'ensemble d'électrodes 120 étant placé entre la première partie de boîtier 110a et la deuxième partie de boîtier 110b,
la première partie de boîtier 110a, et la deuxième partie de boîtier 110b comprenant un premier récepteur 112a et un deuxième récepteur 112b respectivement, le premier récepteur 112a et le deuxième récepteur 112b agençant un espace récepteur AS où l'ensemble d'électrodes 120 est installé en se faisant face ou en étant en contact l'un avec l'autre,
une largeur W1 de l'espace récepteur AS dans la deuxième direction étant supérieure à une largeur W2 de l'ensemble d'électrodes 120 dans la deuxième direction, de sorte qu'au moins une partie d'une extrémité latérale E1 ou de l'autre extrémité latérale E2 dans la deuxième direction de l'une surface latérale du deuxième récepteur 112b dans la première direction ne soit pas supportée par l'ensemble d'électrodes 120 dans la première direction, et
le premier cadre 210 étant configuré pour être au contact de l'une surface latérale dans une première direction du deuxième récepteur 112b pour faire pression vers l'autre direction de la première direction, et fixer la cellule de batterie 100 tout en ne faisant pas pression vers l'autre direction de la première direction et en ne fixant pas l'une extrémité latérale E1 ou l'autre extrémité latérale E2 dans la deuxième direction en n'étant pas au contact de l'une extrémité latérale E1 ou de l'autre extrémité latérale E2 dans la deuxième direction de l'une surface latérale dans la première direction du boîtier de batterie.

13. Appareil de fixation de cellule de batterie selon une quelconque des revendications 1 à 12, la deuxième partie de boîtier 110b étant pliée relativement à la première partie de boîtier 110a pour faire face, dans la première direction, à la première partie de boîtier 110a et la couvrir, un bout ou l'autre bout de la deuxième partie du boîtier 110b étant connecté à un bout ou l'autre bout de la première partie du boîtier 110a dans la deuxième direction, et une autre portion de la deuxième partie du boîtier 110b, l'un bout ou l'autre bout de la deuxième partie du boîtier 110b étant toutefois détachable de la première partie du boîtier 110a,
le deuxième récepteur 112b ayant une forme concave définissant un espace prédéterminé PS2 constituant au moins une partie de l'espace récepteur AS pour recevoir au moins une portion de l'ensemble d'électrodes 120, et
une largeur W1' de l'espace prédéterminé PS2 dans la deuxième direction parmi les espaces récepteurs AS étant supérieure à une largeur W2 de l'ensemble d'électrodes 120 dans la deuxième direction afin d'éviter toute interférence entre le deuxième récepteur 112b et l'ensemble d'électrodes 120 lorsque la deuxième partie du boîtier 110b est pliée relativement à la première partie du boîtier 110a avec l'ensemble d'électrodes 120 disposé dans le premier récepteur 112a, de sorte qu'au moins une partie de l'extrémité latérale E1 ou de l'autre extrémité latérale E2 dans la deuxième direction de l'une surface latérale du deuxième récepteur 112b dans la première direction ne soit pas supportée par l'ensemble d'électrodes 120 dans la première direction.

14. Appareil de fixation de cellule de batterie selon une quelconque des revendications 1 à 13, dans lequel, lors de son utilisation pour la fixation d'une cellule de batterie, une longueur dans la deuxième direction de l'une extrémité latérale E1 ou de l'autre extrémité latérale E2 dans la deuxième direction de l'une surface latérale du boîtier de batterie 110 dans la première direction qui ne se trouve pas au contact du premier cadre 210 est égale ou supérieure au 1/40 et égale ou inférieure au 1/5 de la longueur dans la deuxième direction de l'une surface latérale du boîtier de la batterie 110 dans la première direction.
